# EUROPÄISCHE PATENTSCHRIFT

(11) **EP 3 694 933 B1**
(45) Veröffentlichungstag und Bekanntmachung des Hinweises auf die Patenterteilung: **08.12.2021**
(21) Anmeldenummer: 18780148.5
(22) Anmeldetag: 08.10.2018
(51) Int. Cl.: C09D 5/08

(54) **ELEKTROTAUCHLACKE ENTHALTEND WENIGSTENS EINE TRIAZIN-VERBINDUNG**
ELECTRO DEPOSITION COATING AGENTS CONTAINING AT LEAST ONE TRIAZINE COMPOUND
PEINTURES ÉLECTROPHORÉTIQUES CONTENANT AU MOINS UN COMPOSÉ TRIAZINIQUE

(30) Priorität: 09.10.2017 EP 17195433
(43) Veröffentlichungstag der Anmeldung: 19.08.2020
(73) Patentinhaber: BASF Coatings GmbH, 48165 Münster (DE)
(72) Erfinder: WEGNER, Egon, 48165 Münster (DE); JOHANNPOETTER, Oliver, 48165 Münster (DE); BLANG, Tobias, 48165 Münster (DE)
(74) Vertreter: BASF IP Association
(86) Internationale Anmeldenummer: PCT/EP2018/077347
(87) Internationale Veröffentlichungsnummer: WO 2019/072774

(56) Entgegenhaltungen:
- EP-A1- 1 041 125
- EP-A1- 1 743 925

## Beschreibung

Die vorliegende Erfindung betrifft einen kathodisch abscheidbaren wässrigen Elektrotauchlack enthaltend wenigstens ein Epoxid-Amin-Addukt (a), wenigstens ein Pigment und/oder wenigstens einen Füllstoff (b) und wenigstens ein Vernetzungsmittel (c), wobei ein Anteil von wenigstens 25 Gew.-% des Vernetzungsmittels (c), bezogen auf das Gesamtgewicht des Vernetzungsmittels (c), durch wenigstens ein Tris(alkoxycarbonylamino)-1,3,5-triazin gebildet wird, ein Verfahren zur Beschichtung eines elektrisch leitfähigen Substrates durch kathodische Elektrotauchlackierung unter Einsatz dieses Elektrotauchlacks, ein damit beschichtetes Substrat sowie eine Verwendung eines Tris(alkoxycarbonylamino)-1,3,5-triazins in einem kathodisch abscheidbaren Elektrotauchlack zur Reduzierung oder Eliminierung der Störungsempfindlichkeit des Elektrotauchlackbades gegenüber darin enthaltenen Verunreinigungen durch Phosphate und/oder durch andere Metallsalze, die durch der Elektrotauchlackierung vorgelagerten Vorbehandlungsschritte in das Elektrotauchlackbad verschleppt worden sind.

### Stand der Technik

Im Automobilbereich müssen die zur Herstellung eingesetzten metallischen Bauteile üblicherweise gegen Korrosion geschützt werden. Die Anforderungen an den zu erzielenden Korrosionsschutz sind sehr hoch, insbesondere da seitens der Hersteller oftmals über viele Jahre eine Garantie gegen Durchrostung gewährt wird. Solch ein Korrosionsschutz wird üblicherweise durch eine Beschichtung der Bauteile oder der zu ihrer Herstellung eingesetzten Substrate mit wenigstens einer dafür geeigneten Beschichtung erzielt.

Um den erforderlichen Korrosionsschutz gewährleisten zu können, wird üblicherweise auf das gegebenenfalls mittels einer Phosphatierung vorbehandelte metallische Substrat eine Elektrotauchlackschicht aufgebracht. Elektrotauchlacke (ETL) sind Lacke, die Filmbildner, Pigmente und/oder Füllstoffe und häufig Additive enthalten. Es gibt anodisch und kathodisch abscheidbare Elektrotauchlacke, wobei in der industriellen Lackierung und insbesondere in der Automobillackierung die kathodisch abscheidbaren Lacke die größte Bedeutung haben. Bei der kathodischen Elektrotauchlackierung werden die zu beschichtenden Substrate in ein Elektrotauchlack-Bad eingetaucht und als Kathode geschaltet. Das Bad weist eine Anode als Gegenelektrode auf. Die Partikel der Elektrotauchlack-Dispersion sind mit positiver Ladung stabilisiert und scheiden sich unter Ausbildung eines Lackfilms an der Kathode ab. Nach der Abscheidung wird das beschichtete Substrat aus dem Elektrotauchbad entfernt und der Lackfilm wird eingebrannt, d.h. thermisch gehärtet.

Elektrotauchlacke sind im Stand der Technik bekannt. DE 199 21 223 A1 offenbart ein Verfahren zur Elektrotauchlackierung, welches die Verwendung eines Bindemittelsystems vorsieht, das nicht nur thermisch, sondern auch mittels UV-Strahlung härtbar ist und zu diesem Zweck olefinisch ungesättigte Doppelbindungen aufweist. Dadurch wird insbesondere die Elektrotauchlackierung von Substraten mit nicht direkt zugänglichen Kanten ermöglicht. Aus DE 100 36 560 A1 sind Elektrotauchlacke bekannt, die durch Schmelzemulgierung herstellbar sind. Im europäischen Patent EP 1 192 226 B1 werden Elektrotauchlacke beschrieben, die wasserlösliche Polyvinylalkohol-(Co)polymere als Additive enthalten, um sowohl Kantenschutz als auch die Kontaminationsfestigkeit gegenüber Ölen zu verbessern. Schließlich sind aus der WO 99/31187 A1 kationisch abscheidbare Elektrotauchlacke bekannt, die Milchsäure-modifizierte Bismutverbindungen enthalten, wodurch der Einsatz von Bleiverbindungen vermieden werden kann, aber mittels derer trotzdem ein ausreichender Korrosionsschutz erzielt wird. Ferner werden in EP 1 743 925 A1 Elektrotauchlacke beschrieben, die eine Kombination einer TriazinVerbindung und eines OH-funktionellen und Amino-Gruppen-haltigen Copolymeren umfassen.

Auch in der Patentanmeldung DE 197 03 869 A1 und dem Patent EP 0 505 445 B1 werden Elektrotauchlacke beschrieben. Die darin beschriebenen Lacke enthalten als Bindemittel eine Mischung aus modifizierten Epoxidharzen und weiteren zur Vernetzung befähigten Komponenten, insbesondere blockierten Polyisocyanaten. Solche blockierten Polyisocyanate sind weit verbreitete Vernetzer in der kathodischen Elektrotauchlackierung. Vorwiegend werden aromatische Polyisocyanate eingesetzt, weil sie die reaktivsten Isocyanate sind. Beispiele geeigneter Polyisocyanate sind Toluylendiisocyanat (TDI) und 4,4-Diisocyanatodiphenylmethan (MDI).

Die in DE 197 03 869 A1 beschriebenen Elektrotauchlacke liefern zwar einen hervorragenden Korrosionsschutz, haben jedoch den Nachteil, dass sie empfindlich sind gegenüber Verunreinigungen durch Metallphosphate und andere Metallsalze. Diese Verunreinigungen sind in der Praxis nicht zu vermeiden, weil die zu beschichtenden Substrate in der Regel vor der Elektrotauchlackierung zur weiteren Verbesserung des Korrosionsschutzes in einem vorgeschalteten Vorbehandlungsschritt phosphatiert werden, beispielsweise durch eine Zink-Phosphatierung. Weil es praktisch unmöglich ist, die Substrate, beispielsweise Automobilkarosserien, vollständig von anhaftenden Phosphaten und gegebenenfalls anderen Metallsalzen durch einen Reinigungsschritt zu befreien, werden immer wieder die genannten Verunreinigungen in das Elektrotauchbad verschleppt (Phosphatverschleppung). Hierdurch kommt es zu Filmstörungen der Elektrotauchlackierung, die den Korrosionsschutz verschlechtern können, da sie die Vernetzung stören, unerwünschte Nachteile wie eine nur unzureichende Lösemittelbeständigkeit und oftmals zu einer optischen Beeinträchtigung des Erscheinungsbilds der mehrschichtigen endgültigen Automobillackierung. Zudem kann eine solche Phosphatverschleppung insbesondere zu nur unzureichend gehärteten ETL-Filmen führen, insbesondere auf den Masseteilen der eingesetzten Substrate wie zum Beispiel dem Türeinstiegsbereich. Dies stellt ein großes Problem dar, da der Phosphatgehalt eines mit Phosphaten verunreinigten Elektrotauchlackbads grundsätzlich nur durch einen Komplett- bzw. Teilaustausch des Bades reduziert bzw. eliminiert werden kann. Dies ist jedoch aus ökonomischen Gründen nicht sinnvoll, da dies einem Verwerfen von einer Menge von bis 300 000 Liter an Elektrotauchlack gleich kommen würde.

Weiterhin benötigen die im Stand der Technik wie DE 197 03 869 A1 bekannten Elektrotauchlacke vergleichsweise hohe Einbrenntemperaturen von beispielsweise 160 bis 180°C. Diese hohen Einbrenntemperaturen führen zu einem hohen Energieverbrauch, was aus ökonomischer Sicht unerwünscht ist. Die WO 2009/021719 A2 lehrt zu diesem Zweck, d.h. zur Verringerung der Einbrenntemperatur, wasserunlösliches Bismutsubnitrat in kathodisch abscheidbaren Elektrotauchlacken einzusetzen. Durch die Gegenwart des Bismutsubnitrats kann im Vergleich zu Elektrotauchlacken, die wasserlösliche Bismutsalze wie Bismutnitrat enthalten, die Einbrenntemperatur gesenkt werden.

Es besteht daher ein Bedarf an Elektrotauchlacken, die wenigstens einen der vorstehend genannten Nachteile nicht aufweisen.

### Aufgabe

Eine Aufgabe der vorliegenden Erfindung ist es daher insbesondere, einen kathodisch abscheidbaren Elektrotauchlack zur Verfügung zu stellen, bei dem die Störungsempfindlichkeit gegenüber Verunreinigungen durch Phosphate und/oder andere Metallsalze stark reduziert oder vorzugsweise vollständig eliminiert werden kann. Zusätzlich soll die für die Aushärtung der Lackfilme notwendige Einbrenntemperatur gesenkt werden und der erhaltene Lackfilm soll keine nachteiligen optischen und/oder mechanischen Eigenschaften aufweisen.

### Lösung

Diese Aufgabe wird gelöst durch die in den Patentansprüchen beanspruchten Gegenstände sowie den in der nachfolgenden Beschreibung beschriebenen bevorzugten Ausführungsformen dieser Gegenstände.

Ein erster Gegenstand der vorliegenden Erfindung ist daher ein kathodisch abscheidbarer wässriger Elektrotauchlack enthaltend
(a) wenigstens ein Epoxid-Amin-Addukt,
(b) wenigstens ein Pigment und/oder wenigstens einen Füllstoff und
(c) wenigstens ein Vernetzungsmittel,

wobei ein Anteil von wenigstens 25 Gew.-% des Vernetzungsmittels (c), bezogen auf das Gesamtgewicht des Vernetzungsmittels (c), durch wenigstens ein Tris(alkoxycarbonylamino)-1,3,5-triazin gebildet wird und der gegebenenfalls verbleibende Anteil durch wenigstens ein von dem wenigstens einen Tris(alkoxycarbonylamino)-1,3,5-triazin verschiedenen Vernetzungsmittel ausgewählt aus der Gruppe bestehend aus blockierten Polyisocyanaten, Aminoplasten und Mischungen davon gebildet wird.

Ein weiterer Gegenstand der vorliegenden Erfindung ist ein Verfahren zur zumindest teilweisen Beschichtung eines elektrisch leitfähigen Substrates durch kathodische Elektrotauchlackierung, bei dem
(1) das elektrisch leitfähige Substrat zumindest teilweise in ein Elektrotauchbad getaucht wird, welches den erfindungsgemäßen Elektrotauchlack enthält,
(2) das Substrat als Kathode geschaltet wird,
(3) durch Gleichstrom ein Lackfilm auf dem Substrat abgeschieden wird,
(4) das lackierte Substrat aus dem Elektrotauchlackbad entfernt wird und
(5) der auf dem Substrat abgeschiedene Lackfilm eingebrannt wird.

Ein weiterer Gegenstand der vorliegenden Erfindung ist ein elektrisch leitfähiges Substrat, welches zumindest teilweise mit einem eingebrannten erfindungsgemäßen Elektrotauchlack beschichtet ist.

Ein weiterer Gegenstand der vorliegenden Erfindung ist eine Verwendung wenigstens eines Tris(alkoxycarbonylamino)-1,3,5-triazins in einem kathodisch abscheidbaren Elektrotauchlack in einem Anteil von wenigstens 25 Gew.-%, bezogen auf das Gesamtgewicht an Vernetzungsmitteln in dem Elektrotauchlack, zur Reduzierung oder Eliminierung der Störungsempfindlichkeit des Elektrotauchlackbades gegenüber darin enthaltenen Verunreinigungen durch Phosphate, insbesondere Metallphosphate und/oder durch andere Metallsalze, die durch der Elektrotauchlackierung vorgelagerte Vorbehandlungsschritte in das Elektrotauchlackbad verschleppt worden sind, und/oder zur Erniedrigung der Einbrenntemperatur des Elektrotauchlacks bei einer zumindest teilweisen Beschichtung eines elektrisch leitfähigen Substrats auf eine Temperatur in einem Bereich von 125°C bis 165°C.

Es wurde überraschend gefunden, dass der erfindungsgemäße Elektrotauchlack insbesondere aufgrund der Anwesenheit der Komponente (c) bzw. des darin enthaltenen Anteils an Triazin eine signifikant reduzierte bzw. vollständige eliminierte Störungsempfindlichkeit gegenüber Verunreinigungen durch Phosphate und/oder durch andere Metallsalze aufweist, die durch der Elektrotauchlackierung vorgelagerte Vorbehandlungsschritte in das Elektrotauchlackbad verschleppt worden sind. Insbesondere hat sich dabei überraschenderweise gezeigt, dass die erfindungsgemäßen Elektrotauchlacke auch bei (unerwünschter) Gegenwart von Phosphaten und/oder anderen Metallsalzen nach dem Einbrennen zu ausreichend gehärteten Filmen führen und zwar auch auf Masseteilen wie dem Türeinstiegsbereich. Es wurde insbesondere überraschend gefunden, dass der erfindungsgemäße Elektrotauchlack - insbesondere aufgrund des darin enthaltenen Mindestanteils von 25 Gew.-% an Triazin, bezogen auf das Gesamtgewicht des Vernetzungsmittels (c) - eine hohe Phosphatunempfindlichkeit aufweist, wohingegen Vergleichslacke mit geringerem Anteil an Triazin wesentlich empfindlicher gegenüber Phosphaten sind (vgl. Punkt 5.6 und Tabelle 10 der experimentellen Daten).

Zudem wurde überraschenderweise gefunden, dass die aus den erfindungsgemäßen Elektrotauchlacken erhaltenen Beschichtungen insbesondere aufgrund der Anwesenheit der Komponente (c) bzw. des darin enthaltenen Anteils an Triazin keine nachteiligen optischen und/oder mechanischen Eigenschaften, insbesondere keine Filmstörungen, aufweisen. Insbesondere zeichnen sich die so erhaltenen Beschichtungen durch eine gute Lösemittelbeständigkeit aus. Auch ein guter Korrosionsschutz entsprechender beschichteter metallischer Substrate sowie eine gute Wetterbeständigkeit der erhaltenen Beschichtungen wird erzielt.

Ferner wurde überraschenderweise gefunden, dass der erfindungsgemäße Elektrotauchlack insbesondere aufgrund der Anwesenheit der Komponente (c) bzw. des darin enthaltenen Anteils an Triazin eine Erniedrigung der Einbrenntemperatur bei einer zumindest teilweisen Beschichtung eines geeigneten Substrats ermöglicht.

### Ausführliche Beschreibung

Der Begriff "umfassend" im Sinne der vorliegenden Erfindung, beispielsweise im Zusammenhang mit dem erfindungsgemäßen Elektrotauchlack, hat vorzugsweise die Bedeutung "bestehend aus". Dabei können hinsichtlich des erfindungsgemäßen Elektrotauchlacks - neben den Komponenten (a), (b), (c) und Wasser - eine oder mehrere der weiteren nachstehend genannten optional in dem erfindungsgemäßen Elektrotauchlack enthaltenen Komponenten in diesem enthalten sein. Alle Komponenten können dabei jeweils in ihren nachstehend genannten bevorzugten Ausführungsformen vorliegen.

### Erfindungsgemäßer Elektrotauchlack

Der erfindungsgemäße kathodisch abscheidbare wässriger Elektrotauchlack enthält wenigstens die Komponenten (a), (b) und (c) sowie Wasser.

Der erfindungsgemäße kathodisch abscheidbare wässrige Elektrotauchlack eignet sich zur zumindest teilweisen Beschichtung eines elektrisch leitfähigen Substrats mit einem Elektrotauchlack, d.h. er ist dazu geeignet, zumindest teilweise in Form einer Elektrotauchlackschicht auf die Substratoberfläche eines elektrisch leitfähigen Substrats aufgebracht zu werden.

Der erfindungsgemäße kathodisch abscheidbare Elektrotauchlack ist wässrig. Unter dem Begriff "wässrig" wird im Zusammenhang mit dem erfindungsgemäßen Elektrotauchlack im Sinne der vorliegenden Erfindung vorzugsweise verstanden, dass Wasser als Lösemittel bzw. als Verdünnungsmittel als Hauptbestandteil vorliegt, vorzugsweise in einer Menge von wenigstens 35 Gew.-%, bezogen auf das Gesamtgewicht des erfindungsgemäßen Elektrotauchlacks. Organische Lösemittel können in geringeren Anteilen zusätzlich vorliegen, vorzugsweise in einer Menge von <20 Gew.-%.

Vorzugsweise enthält der erfindungsgemäße Elektrotauchlack einen Anteil an Wasser von mindestens 40 Gew.-%, besonders bevorzugt von mindestens 45 Gew.-%, ganz besonders bevorzugt von mindestens 50 Gew.-%, insbesondere von mindestens 55 Gew.-%, jeweils bezogen auf das Gesamtgewicht des Elektrotauchlacks.

Vorzugsweise enthält der erfindungsgemäße Elektrotauchlack einen Anteil an organischen Lösemitteln, der in einem Bereich von <20 Gew.-%, besonders bevorzugt in einem Bereich von 0 bis <20 Gew.-%, ganz besonders bevorzugt in einem Bereich von 0,5 bis 20 Gew.-% oder bis 17,5 Gew.-% oder bis 15 Gew.-% oder bis 10 Gew.-% liegt, jeweils bezogen auf das Gesamtgewicht des Elektrotauchlacks. Als Beispiele für solche organischen Lösemittel seien heterocyclische, aliphatische oder aromatische Kohlenwasserstoffe, ein- oder mehrwertige Alkohole, insbesondere Methanol und/oder Ethanol, Ether, Ester, Ketone und Amide, wie z. B. N-Methylpyrrolidon, N-Ethylpyrrolidon, Dimethylformamid, Toluol, Xylol, Butanol, Ethyl- und Butylglykol sowie deren Acetate, Butyldiglykol, Diethylenglykoldimethylether, Cyclohexanon, Methylethylketon, Methylisobutylketon, Aceton, Isophoron oder Mischungen davon genannt.

Vorzugsweise liegt der Festkörpergehalt des erfindungsgemäßen Elektrotauchlacks in einem Bereich von 5 bis 45 Gew.-%, besonders bevorzugt von 5 bis 40 Gew.-%, ganz besonders bevorzugt von 7,5 bis 40 Gew.-%, insbesondere von 7,5 bis 35 Gew.-%, am meisten bevorzugt von 10 bis 35 Gew.-% oder von 15 bis 30 Gew.-%, jeweils bezogen auf das Gesamtgewicht des Elektrotauchlacks. Die Bestimmung des Festkörpergehalts, also des nicht-flüchtigen Anteils, erfolgt gemäß der nachstehend beschriebenen Methode.

Vorzugsweise weist der erfindungsgemäße Elektrotauchlack einen pH-Wert im Bereich von 2,0 bis 10,0, besonders bevorzugt im Bereich von 2,5 bis 9,5 oder im Bereich von 2,5 bis 9,0, ganz besonders bevorzugt im Bereich von 3,0 bis 8,5 oder im Bereich von 3,0 bis 8,0, insbesondere im Bereich von 3,5 bis 7,5 oder im Bereich von 3,5 bis 7,0, insbesondere bevorzugt im Bereich von 4,0 bis 6,5, am meisten bevorzugt im Bereich von 4,5 bis 6,5 oder von 5,0 bis 6,0 auf.

Der erfindungsgemäße Elektrotauchlack enthält die Komponente (a) vorzugsweise in einer Menge in einem Bereich von 15 bis 85 Gew.-%, besonders bevorzugt von 20 bis 80 Gew.-%, ganz besonders bevorzugt von 25 bis 77,5 Gew.-%, insbesondere von 30 bis 75 Gew.-% oder von 35 bis 75 Gew.-%, am meisten bevorzugt von 40 bis 70 Gew.-% oder von 45 bis 70 Gew.-% oder von 50 bis 70 Gew.-%, jeweils bezogen auf den gesamten Festkörpergehalt des Elektrotauchlacks.

Der erfindungsgemäße Elektrotauchlack enthält die Komponente (a) vorzugsweise in einer Menge in einem Bereich von 1 bis 40 Gew.-%, besonders bevorzugt von 2,5 bis 37,5 Gew.-%, ganz besonders bevorzugt von 4 bis 35 Gew.-%, insbesondere von 5,5 bis 32,5 Gew.-% am meisten bevorzugt von 7 bis 30 Gew.-% oder von 8 bis 25 Gew.-%, jeweils bezogen auf das Gesamtgewicht des Elektrotauchlacks.

Der erfindungsgemäße Elektrotauchlack enthält die Komponente (b) vorzugsweise in einer Menge in einem Bereich von 0,2 bis 20 Gew.-%, besonders bevorzugt von 0,5 bis 17,5 Gew.-%, ganz besonders bevorzugt von 0,75 bis 15 Gew.-%, insbesondere von 1,0 bis 12,5 Gew.-% am meisten bevorzugt von 1,0 bis 10 Gew.-% oder von 1,0 bis 9 Gew.-%, jeweils bezogen auf das Gesamtgewicht des Elektrotauchlacks.

Der erfindungsgemäße Elektrotauchlack enthält die Komponente (c) vorzugsweise in einer Menge in einem Bereich von 5 bis 45 Gew.-%, besonders bevorzugt von 6 bis 42,5 Gew.-%, ganz besonders bevorzugt von 7 bis 40 Gew.-%, insbesondere von 8 bis 37,5 Gew.-% oder von 9 bis 35 Gew.-%, am meisten bevorzugt von 10 bis 35 Gew.-%, insbesondere bevorzugt von 15 bis 35 Gew.-%, jeweils bezogen auf den gesamten Festkörpergehalt des Elektrotauchlacks.

Der erfindungsgemäße Elektrotauchlack enthält die Komponente (c) vorzugsweise in einer Menge in einem Bereich von 0,5 bis 30 Gew.-%, besonders bevorzugt von 1 bis 25 Gew.-%, ganz besonders bevorzugt von 1,5 bis 20 Gew.-%, insbesondere von 2 bis 17,5 Gew.-% am meisten bevorzugt von 2,5 bis 15 Gew.-%, insbesondere bevorzugt von 3 bis 10 Gew.-%, jeweils bezogen auf das Gesamtgewicht des Elektrotauchlacks.

Vorzugsweise enthält der erfindungsgemäße Elektrotauchlack keine Komponente, die olefinisch ungesättigte Doppelbindungen aufweist. Insbesondere enthält keine der Komponenten (a) und (c) des erfindungsgemäßen Elektrotauchlacks olefinisch ungesättigte Doppelbindungen.

Die Anteile in Gew.-% aller im erfindungsgemäßen Elektrotauchlack enthaltenen Komponenten (a), (b), (c) und Wasser sowie weiterer gegebenenfalls zusätzlich vorhandener Komponenten addieren sich auf 100 Gew.-%, bezogen auf das Gesamtgewicht des Elektrotauchlacks.

Vorzugsweise liegt das relative Gewichtsverhältnis der Komponenten (a) und (c) zueinander in dem erfindungsgemäßen Elektrotauchlack in einem Bereich von 5:1 bis 1,1:1, besonders bevorzugt in einem Bereich von 4,5:1 bis 1,1:1, ganz besonders bevorzugt in einem Bereich von 4:1 bis 1,2:1, insbesondere in einem Bereich von 3:1 bis 1,5:1.

Vorzugsweise ist das wenigstens eine Epoxid-Amin-Addukt (a) in einer Menge von 50 bis 70 Gew.-%, bezogen auf den gesamten Festkörpergehalt des Elektrotauchlacks, im Elektrotauchlack vorhanden, und das wenigstens eine Vernetzungsmittel (c) in einer Menge von 10 bis 35 Gew.-%, bezogen auf den gesamten Festkörpergehalt des Elektrotauchlacks, im Elektrotauchlack vorhanden.

Vorzugsweise enthält der erfindungsgemäße Elektrotauchlack kein OH-funktionelles Copolymer, welches wenigstens eine Struktureinheit aufweist, die wiederum wenigstens eine Amino-Gruppe aufweist, insbesondere kein solches Copolymer, welches mittels Copolymerisation von Vinyl-Gruppen-haltigen Monomeren hergestellt wird.

### Komponente (a)

Bei der Komponente (a) des erfindungsgemäßen Elektrotauchlacks handelt es sich um wenigstens ein Epoxid-Amin-Addukt.

Unter einem Epoxid-Amin-Addukt wird im Sinne der vorliegenden Erfindung ein Umsetzungsprodukt wenigstens eines Epoxidharzes und wenigstens eines Amines verstanden. Als Epoxidharze werden insbesondere solche auf Basis von Bisphenol A und/oder Derivate hiervon eingesetzt. Als Amine werden primäre und/oder sekundäre Amine oder deren Salze und/oder Salze von tertiären Aminen mit den Epoxidharzen umgesetzt.

Vorzugsweise ist das wenigstens eine Epoxid-Amin-Addukt (a) ein kationisches Epoxid-basiertes und Amin-modifiziertes Harz. Die Herstellung solcher kationischer Amin-modifizierter Epoxid-basierter Harze ist bekannt und wird beispielsweise in DE 35 18 732, DE 35 18 770, EP 0 004 090, EP 0 012 463, EP 0 961 797 B1 und EP 0 505 445 B1 beschrieben. Unter kationischen Epoxid-basierten Amin-modifizierten Harzen werden vorzugsweise Reaktionsprodukte aus wenigstens einem Polyepoxid mit vorzugsweise zwei oder mehr, z.B. drei, Epoxid-Gruppen, und wenigstens einem Amin, vorzugsweise wenigstens einem primären und/oder sekundären Amin verstanden. Besonders bevorzugte Polyepoxide sind dabei aus Polyphenolen und Epihalohydrinen hergestellte Polyglycidylether von Polyphenolen. Als Polyphenole können insbesondere Bisphenol A und/oder Bisphenol F eingesetzt werden. Weitere geeignete Polyepoxide sind Polyglycidylether von mehrwertigen Alkoholen, wie z. B. Ethylenglykol, Diethylenglykol, Triethylenglykol, 1,2-Propylenglykol- 1-4-Propylenglykol, 1,5-Pentandiol, 1,2,6-Hexantriol, Glycerin und Bis-(4-hydroxycyclohexyl)2,2propan. Das eingesetzte Polyepoxid kann auch ein modifiziertes Polyepoxid sein. Unter modifizierten Polyepoxiden werden solche Polyepoxide verstanden, in denen ein Teil der reaktiven funktionellen Gruppen mit wenigstens einer modifizierenden Verbindung umgesetzt worden ist. Beispiele für solche modifizierenden Verbindungen sind:
i) Carboxylgruppenhaltige Verbindungen, wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z. B. Adipinsäure, Sebacinsäure, Isophthalsäure oder dimere Fettsäuren), Hydroxialkylcarbonsäuren (z.B. Milchsäure, Dimethylolpropionsäure) sowie carboxylgruppenhaltige Polyester oder
ii) aminogruppenhaltige Verbindungen, wie Diethylamin oder Ethylhexylamin oder Diamine mit sekundären Aminogruppen, z. B. N,N'-Dialkylalykendiamine, wie Dimethylethylendiamin, N,N'-Dialkyl-polyoxialkylenamine, wie N,N'-dimethylpolyoxipropylendiamin, cyanalkylierte Alkylendiamine, wie Bis-N,N'-Cyanethyl-ethylendiamin, cyanalkylierte Polyoxialkylenamine, wie Bis-N,N'-Cyanethylpolyoxipropylendiamin, Polyaminoamide, wie z. B. Versamide, insbesondere endständige Aminogruppen enthaltende Umsetzungsprodukte aus Diaminen (z.B. Hexamethylendiamin), Polycarbonsäuren, insbesondere Dimerfettsäuren und Monocarbonsäuren, insbesondere Fettsäuren, oder das Umsetzungsprodukt von einem Mol Diaminohexan mit zwei Molen Monoglycidylether oder Monoglycidylester, speziell Glycidylester α-verzweigter Fettsäuren, wie der Versaticsäure, oder
iii) hydroxylgruppenhaltige Verbindungen, wie Neopentylglykol, Bis-ethoxiliertes Neopentylglykol, Hydroxipivalinsäureneopentylglykolester, Dimethylhydantoin-N-N'-diethanol, Hexandiol-1,6, Hexandiol-2,5, 1,4-Bis- (hydroximethyl)cyclohexan, 1,1-Isopropyliden-bis-(p-phenoxy)-2-propanol, Trimethylolpropan, Pentaerythrit oder Aminoalkohole, wie Triethanolamin, Methyldiethanolamin oder hydroxylgruppenhaltige Alkylketimine, wie Aminomethylpropandiol-1,3-methyl-isobutylketimin oder Tris-(hydroximethyl)-aminomethan-cyclohexanonketimin sowie auch Polyglykolether, Polyesterpolyole, Polyetherpolyole, Polycaprolactonpolyole, Polycaprolactampolyole verschiedener Funktionalität und Molekulargewichte oder
iv) gesättigte oder ungesättigte Fettsäuremethylester, die in Gegenwart von Natriummethylat mit Hydroxylgruppen der Epoxidharze umgeestert werden.

Beispiele für zur Herstellung der als Komponente (a) einsetzbare Amine sind Mono-und Dialkylamine, wie Methylamin, Ethylamin, Propylamin, Butylamin, Dimethylamin, Diethylamin, Dipropylamin, Methylbutylamin, Alkanolamine, wie z. B. Methylethanolamin oder Diethanolamin, Dialkylaminoalkylamine, wie z. B. Dimethylaminoethylamin, Diethylaminopropylamin, oder Dimethylaminopropylamin. Die einsetzbaren Amine können auch noch andere funktionelle Gruppen enthalten, sofern diese die Umsetzung des Amins mit der Epoxidgruppe des gegebenenfalls modifizierten Polyepoxids nicht stören und auch nicht zu einer Gelierung der Reaktionsmischung führen. Bevorzugt werden sekundäre Amine eingesetzt. Die für die Wasserverdünnbarkeit und elektrische Abscheidung erforderlichen Ladungen können durch Protonierung mit wasserlöslichen Säuren (z.B. Borsäure, Ameisensäure, Essigsäure, Milchsäure, bevorzugt Essigsäure) erzeugt werden. Eine weitere Möglichkeit zur Einführung kationischer Gruppen in die das gegebenenfalls modifizierte Polyepoxid besteht in der Umsetzung von Epoxidgruppen des Polyepoxids mit Amin-Salzen.

Das als Komponente (a) einsetzbare Epoxid-Amin-Addukt ist vozugsweise ein Umsetzungsprodukt eines Epoxidharzes auf der Basis von Bisphenol A und primären und/oder sekundären Aminen oder deren Salzen und/oder dem Salz eines tertiären Amins.

### Komponente (b)

Bei der Komponente (b) des erfindungsgemäßen Elektrotauchlacks handelt es sich um wenigstens ein Pigment und/oder wenigstens einen Füllstoff. Vorzugsweise enthält der erfindungsgemäßen Elektrotauchlack wenigstens ein Pigment und wenigstens einen Füllstoff als Komponente (b).

Der Begriff "Füllstoff" ist dem Fachmann bekannt, beispielsweise aus der DIN 55943 (Datum: Oktober 2001). Unter einem "Füllstoff" wird im Sinne der vorliegenden Erfindung vorzugsweise eine im Anwendungsmedium wie beispielsweise dem erfindungsgemäßen Elektrotauchlack im Wesentlichen, vorzugsweise vollständig, unlösliche Komponente verstanden, die insbesondere zur Vergrößerung des Volumens eingesetzt wird. Vorzugsweise unterscheiden sich "Füllstoffe" im Sinne der vorliegenden Erfindung von "Pigmenten" durch ihren Brechungsindex, der für Füllstoffe <1,7 beträgt.

Der Begriff "Pigment" ist dem Fachmann ebenfalls bekannt, beispielsweise aus der DIN 55943 (Datum: Oktober 2001). Unter einem "Pigment" werden im Sinne der vorliegenden Erfindung vorzugsweise pulver- oder plättchenförmige Komponenten verstanden, die in dem sie umgebenden Medium, wie beispielsweise dem erfindungsgemäßen Elektrotauchlack, im Wesentlichen, vorzugsweise vollständig. unlöslich sind. Dabei handelt es sich vorzugsweise um Farbmittel und/oder um Substanzen, die aufgrund ihrer magnetischen, elektrischen und/oder elektromagnetischen Eigenschaften als Pigment eingesetzt werden können. Von "Füllstoffen" unterscheiden sich Pigmente vorzugsweise durch ihren Brechungsindex, der für Pigmente ≥1,7 beträgt.

Jeder übliche dem Fachmann bekannte Füllstoff kann als Komponente (b) eingesetzt werden. Beispiele geeigneter Füllstoffe sind Kaolin, Dolomit, Calcit, Kreide, Calciumsulfat, Bariumsulfat, Graphit, Silikate wie Magnesiumsilikate, insbesondere entsprechende Schichtsilikate wie Hectorit, Bentonit, Montmorillonit, Talkum und/oder Glimmer, Kieselsäuren, insbesondere pyrogene Kieselsäuren, Hydroxide wie Aluminiumhydroxid oder Magnesiumhydroxid oder organische Füllstoffe wie Textilfasern, Cellulosefasern, Polyethylenfasern oder Polymerpulver; ergänzend wird auf Römpp Lexikon Lacke und Druckfarben, Georg Thieme Verlag, 1998, Seiten 250 ff., «Füllstoffe», verwiesen.

Jedes übliche dem Fachmann bekannte Pigment kann als Komponente (b) eingesetzt werden. Beispiele geeigneter Pigmente sind anorganische und organische farbgebende Pigmente. Beispiele für geeignete anorganische farbgebende Pigmente sind Weißpigmente wie Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat. Weiter anorganische farbgebende Pigmente sind Siliziumdioxid, Aluminiumoxid, Aluminiumoxidhydrat, insbesondere Böhmit, Titandioxid, Zirkoniumoxid, Ceroxid und Mischungen hiervon. Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Vorzugsweise wird die Komponente (b) in Form einer Pigmentpaste bzw. Füllstoffpaste in den Elektrotauchlack eingearbeitet. Entsprechende Pasten enthalten üblicherweise wenigstens ein als Reibharz eingesetztes Polymer. Vorzugsweise ist daher wenigstens ein solches als Reibharz eingesetztes Polymer in dem erfindungsgemäßen Elektrotauchlack enthalten. Vorzugsweise handelt es sich dabei ebenfalls um ein Epoxid-Amin-Addukt, welches in diesem Fall unter die Komponente (a) zu subsumieren ist und/oder dieser entspricht. Vorzugsweise weist das als Reibharz eingesetzte Polymer Bausteine auf, die mit den Oberflächen der Pigmente und/oder Füllstoffe eine Wechselwirkung eingehen. Die Reibharze haben also die Wirkung eines Emulgators. Häufig werden zur Verbesserung der Reibharzeigenschaften quaternäre Ammoniumverbindungen eingebaut. Die Pigmente und/oder Füllstoffe werden vorzugsweise zusammen mit einem Reibharz zu einer Pigmentpaste angerieben. Diese wird zur Herstellung des fertigen Elektrotauchlacks mit den übrigen Bestandteilen vermischt. Die Verwendung einer Pigmentpaste führt vorteilhaft zu einer größeren Flexibilität bei der Elektrotauchlackierung, weil über die Menge der Pigmentpaste der Pigment- und Bindemittelanteil des Elektrotauchlacks jederzeit problemlos an die Bedürfnisse der Praxis angepasst werden kann.

Enthält der erfindungsgemäße Elektrotauchlack wenigstens ein als Reibharz eingesetztes Polymer, welches kein Epoxid-Amin-Addukt und daher von der Komponente (a) verschieden ist, so ist dieses vorzugsweise in einer Menge in einem Bereich von 0,5 bis 10 Gew.-%, besonders bevorzugt von 0,5 bis 7,5 Gew.-%, ganz besonders bevorzugt von 0,75 bis 5 Gew.-%, in dem Elektrotauchlack enthalten, jeweils bezogen auf das Gesamtgewicht des Elektrotauchlacks.

### Komponente (c)

Bei der Komponente (c) des erfindungsgemäßen Elektrotauchlacks handelt es sich um wenigstens ein Vernetzungsmittel, wobei ein Anteil von wenigstens 25 Gew.-% des Vernetzungsmittels (c), bezogen auf das Gesamtgewicht des Vernetzungsmittels (c), durch wenigstens ein Tris(alkoxycarbonylamino)-1,3,5-triazin gebildet wird und der gegebenenfalls verbleibende Anteil - d.h. der gegebenenfalls verbleibende Anteil innerhalb des Vernetzungsmittels von höchstens 75 Gew.-%, bezogen auf das Gesamtgewicht des Vernetzungsmittels (c), - durch wenigstens ein von dem wenigstens einen Tris(alkoxycarbonylamino)-1,3,5-triazin verschiedenen Vernetzungsmittel ausgewählt aus der Gruppe bestehend aus blockierten Polyisocyanaten, Aminoplasten und Mischungen davon gebildet wird. Mit anderen Worten liegen wenigstens 25 Gew.-% des Vernetzungsmittels (c), bezogen auf das Gesamtgewicht des Vernetzungsmittels (c), in dem erfindungsgemäßen Elektrotauchlack als wenigstens ein Tris(alkoxycarbonylamino)-1,3,5-triazin vor. Höchstens 75 Gew.-% des Vernetzungsmittels (c), bezogen auf das Gesamtgewicht des Vernetzungsmittels (c), liegen in dem erfindungsgemäßen Elektrotauchlack als wenigstens ein von dem wenigstens einen Tris(alkoxycarbonylamino)-1,3,5-triazin verschiedenen Vernetzungsmittel ausgewählt aus der Gruppe bestehend aus blockierten Polyisocyanaten, Aminoplasten und Mischungen davon vor. Der Anteil an Tris(alkoxycarbonylamino)-1,3,5-triazin kann bei bis zu 100 Gew.-% liegen, bezogen auf das Gesamtgewicht des Vernetzungsmittels (c) im Elektrotauchlack. Vorzugsweise enthält der erfindungsgemäße Elektrotauchlack neben dem wenigstens einen Vernetzungsmittel (c) keine weiteren Vernetzungsmittel.

Der Begriff der "blockierten Polyisocyanate" ist dem Fachmann bekannt. Als blockierte Polyisocyanate können Polyisocyanate mit wenigstens zwei Isocyanat-Gruppen (Diisocyanate), vorzugsweise aber mit mehr als zwei wie beispielsweise 3 bis 5 Isocyanat-Gruppen benutzt werden, bei denen die Isocyanat-Gruppen umgesetzt worden sind, so dass das gebildete blockierte Polyisocyanat insbesondere gegenüber Hydroxyl- und Amino-Gruppen wie primärer und/oder sekundärer Amino-Gruppen bei Raumtemperatur, d.h. bei einer Temperatur von 18 bis 23°C beständig ist, bei erhöhten Temperaturen, beispielsweise bei ≥ 80°C, ≥ 110°C, ≥ 130°C oder ≥ 140°C aber unter Umsetzung und Bildung von Urethan- bzw. Harnstoff-Bindungen reagiert.

Bei der Herstellung der blockierten Polyisocyanate können beliebige für die Vernetzung geeignete organische Polyisocyanate verwendet werden. Als Isocyanate werden bevorzugt (hetero)aliphatische, (hetero)cycloaliphatische, (hetero)aromatische oder (hetero)aliphatisch-(hetero)aromatische Isocyanate eingesetzt. Bevorzugt sind Polyisocyanate, die 2 bis 36, insbesondere 6 bis 15 Kohlenstoffatome enthalten. Bevorzugte Beispiele sind 1,2-Ethylendiisocyanat, 1,4-Tetramethylendiisocyanat, 1,6-Hexamethylendiisocyanat (HDI), 2,2,4-(2,4,4)-Trimethyl-1,6-hexamethylendiisocyanat (TMDI), Diphenylmethandiisocyanat (MDI), 1,9-Diisocyanato-5-methylnonan, 1,8-Diisocyanato-2,4-dimethyloctan, 1,12-Dodecandiisocyanat, ω,ω'-Diisocyanatodipropylether, Cyclobuten-1,3-diisocyanat, Cyclohexan-1,3- und -1,4-diisocyanat, 3-Isocyanato-methyl-3,5,5-trimethyl-cyclohexylisocyanat (Isophorondiisocyanat, IPDI), 1,4-Diisocyanatomethyl-2,3,5,6-tetramethyl-cyclohexan, Decahydro-8-methyl-(1,4-methanol-naphthalen-2 (oder 3), 5-ylendimethylendiisocyanat, Hexahydro-4,7-methano-indan-1 (oder 2), 5 (oder 6) ylendimethylendiisocyanat, Hexahydro-4,7-methanoindan-1 (oder 2), 5 (oder 6) ylendiisocyanat, 2,4- und/oder 2,6-Hexahydrotoluylendiisocyanat (H6-TDI), 2,4-und/oder 2,6-Toluoldiisocyanat (TDI), Perhydro-2,4'-diphenylmethandiisocyanat, Perhydro-4,4'-diphenylmethandiisocyanat (H₁₂MDI), 4,4'-Diisocyanato-3,3',5,5'-tetramethyldicyclohexylmethan, 4,4'-Diisocyanato-2,2',3,3',5,5',6,6'-octamethyld-icyclohexylmethan, ω,ω'-Diisocyanato-1,4-diethylbenzen, 1,4-Diisocyanatomethyl-2,3,5,6-tetramethylbenzen, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan, 2,5(2,6)-Bis(isocyanatomethyl)bicyclo[2.2.1]heptan (NBDI), sowie jede Mischung dieser Verbindungen. Es können auch Polyisocyanate von höherer Isocyanat-Funktionalität verwendet werden. Beispiele dafür sind trimerisiertes Hexamethylendiisocyanat und trimerisiertes Isophorondiisocyanat, insbesondere die entsprechenden Isocyanurate. Ferner kann man auch Mischungen von Polyisocyanaten benutzen.

Für die Blockierung der Polyisocyanate können vorzugsweise beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl, Octyl-, Nonyl-, 3,3,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenylcarbinol. Andere geeignete Blockierungsmittel sind Hydroxylamine, wie Ethanolamin, Oxime, wie Methylethylketonoxim, Acetonoxim und Cyclohexanonoxim und Amine, wie Dibutylamin und Diisopropylamin.

Aminoplasten (Aminoplastharze) sind dem Fachmann ebenfalls bekannt. Vorzugsweise werden als Aminoplasten Melaminharze, insbesondere Melamin-Formaldehydharze eingesetzt, die dem Fachmann ebenfalls bekannt sind. Vorzugsweise werden jedoch keine Aminoplasten wie Melamin-Formaldehydharze als Vernetzungsmittel (c) eingesetzt. Der erfindungsgemäße Elektrotauchlack enthält somit vorzugsweise keine Aminoplasten wie Melamin-Formaldehydharze.

Tris(alkoxycarbonylamino)-1,3,5-triazine (TACT) sind dem Fachmann ebenfalls bekannt. Der Einsatz von Tris(alkoxycarbonylamino)-1,3,5-triazinen als Vernetzungsmittel in Beschichtungsmittelzusammensetzungen ist bekannt. So wird beispielsweise in DE 197 12 940 A1 der Einsatz solcher Vernetzungsmittel in Basislacken beschrieben. Im US-Patent Nr. 5,084,541 wird die Herstellung entsprechender als Komponente (c) einsetzbarer Verbindungen beschrieben.

Vorzugsweise liegt als wenigstens ein Tris(alkoxycarbonylamino)-1,3,5-triazin wenigstens ein Tris(alkoxycarbonylamino)-1,3,5-triazin der allgemeinen Formel (I) vor 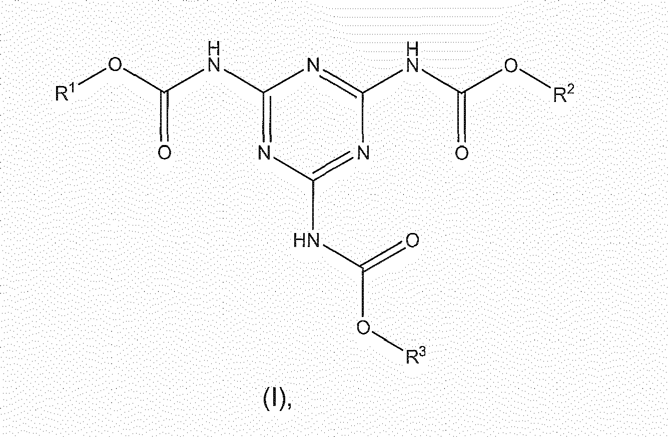 in der die Reste R¹, R² und R³ jeweils unabhängig voneinander für C₁-C₈-Alkylgruppen, besonders bevorzugt jeweils unabhängig voneinander für C₁-C₆-Alkylgruppen, ganz besonders bevorzugt jeweils unabhängig voneinander für C₁-C₄-Alkylgruppen stehen. Dabei sind auch Mischester möglich, d.h. R¹ und R² können beispielsweise jeweils für Methyl und R³ für n-Butyl oder R¹ und R² können beispielsweise jeweils für n-Butyl und R³ für Methyl stehen. Insbesondere steht jeder der Reste R¹, R² und R³ aber für n-Butyl.

Beispiele geeigneter als Komponente (c) einsetzbarer Tris(alkoxycarbonylamino)-1,3,5-triazine sind Tris(methoxycarbonylamino)-, Tris(butoxycarbonylamino)- und Tris(2-Ethylhexoxycarbonylamino)-1,3,5-triazine sowie Mischungen davon. Ganz besonders bevorzugt ist Tris(butoxycarbonylamino)-1,3,5-triazin.

Vorzugsweise wird ein Anteil von wenigstens 30 Gew.-%, besonders bevorzugt von wenigstens 35 Gew.-%, ganz besonders bevorzugt von wenigstens 40 Gew.-%, noch bevorzugter von wenigstens 45 Gew.-%, wiederum bevorzugter von wenigstens 50 Gew.-% des Vernetzungsmittels (c), jeweils bezogen auf das Gesamtgewicht des Vernetzungsmittels (c), durch wenigstens ein Tris(alkoxycarbonylamino)-1,3,5-triazin gebildet. Vorzugsweise wird der jeweils gegebenenfalls verbleibende Anteil innerhalb des Vernetzungsmittels dabei durch wenigstens ein von dem wenigstens einen Tris(alkoxycarbonylamino)-1,3,5-triazin verschiedenen Vernetzungsmittel ausgewählt aus der Gruppe bestehend aus blockierten Polyisocyanaten gebildet. Vorzugsweise liegt der Maximalanteil an Tris(alkoxycarbonylamino)-1,3,5-triazin dabei jeweils bei 100 Gew.-% oder bei <100 Gew.-%, jeweils bezogen auf das Gesamtgewicht des Vernetzungsmittels (c).

In weiteren bevorzugten Ausführungsformen wird ein Anteil von wenigstens 55 Gew.-%, besonders bevorzugt von wenigstens 60 Gew.-%, ganz besonders bevorzugt von wenigstens 65 Gew.-%, noch bevorzugter von wenigstens 70 Gew.-% oder von wenigstens 80 Gew.-%, wiederum bevorzugter von wenigstens 85 Gew.-% oder von wenigstens 90 Gew.-% oder von wenigstens 95 Gew.-% oder von wenigstens 100 Gew.-% des Vernetzungsmittels (c), jeweils bezogen auf das Gesamtgewicht des Vernetzungsmittels (c), durch wenigstens ein Tris(alkoxycarbonylamino)-1,3,5-triazin gebildet. Vorzugsweise liegt der Maximalanteil an Tris(alkoxycarbonylamino)-1,3,5-triazin dabei jeweils bei 100 Gew.-% oder bei <100 Gew.-%, jeweils bezogen auf das Gesamtgewicht des Vernetzungsmittels (c).

Der erfindungsgemäße Elektrotauchlack wird vorzugsweise als 1K-Beschichtungsmittel eingesetzt. Aus diesem Grund enthält der erfindungsgemäße Elektrotauchlack vorzugsweise keine freien Polyisocyanate.

### Weitere optionale Komponenten

Der erfindungsgemäße Elektrotauchlack kann Phosphat als Komponente (d) enthalten. Grundsätzlich ist die Gegenwart von Phosphaten im erfindungsgemäßen Elektrotauchlack nicht erwünscht. Verunreinigungen mit Phosphat sind oftmals jedoch nicht zu vermeiden, da die zu beschichtenden Substrate in der Regel vor der Elektrotauchlackierung zur weiteren Verbesserung des Korrosionsschutzes in einem vorgeschalteten Vorbehandlungsschritt phosphatiert werden, beispielsweise durch eine Zink-Phosphatierung. Weil es schwierig ist, die Substrate vollständig von anhaftenden Phosphaten durch einen Reinigungsschritt zu befreien, werden oftmals Phosphate als Verunreinigungen in das Elektrotauchbad verschleppt (Phosphatverschleppung).

Der erfindungsgemäße Elektrotauchlack kann Phosphat in einer Menge in einem Bereich von bis zu 5 000 ppm wie beispielsweise von 1 bis 5 000 ppm enthalten, auch wenn die Gegenwart von Phosphat wie vorstehend erwähnt nicht erwünscht ist. Der Anteil an Phosphat im erfindungsgemäßen Elektrotauchlack kann dabei mittels induktiv-gekoppelter Plasma-Atom-Emissionspektrometrie (ICP-OES) gemäß DIN EN ISO 11885 (Datum: September 2009) ermittelt werden.

Der erfindungsgemäße Elektrotauchlack kann zudem optional als Komponente (e) einen Katalysator enthalten wie beispielsweise einen metallhaltigen Katalysator. In einer bevorzugten Ausführungsform enthält der erfindungsgemäße Elektrotauchlack jedoch keinen Katalysator wie einen metallhaltigen Katalysator. Vorzugsweise ist der optional enthaltene Katalysator ein Bismut-haltiger Katalysator. Besonders bevorzugt kann ein Bismut-haltiger Katalysator eingesetzt werden, wie beispielsweise Bismut(III)-oxid, basisches Bismut(III)-oxid, Bismut(III)-Hydroxid, Bismut(III)-Carbonat, Bismut(III)-Nitrat, Bismut(III)-Subnitrat (basisches Bismut(III)-Nitrat), Bismut(III)-Salicylat und/oder Bismut(III)-Subsalicylat (basisches Bismut(III)-Salicylat) sowie Mischungen davon. Ganz besonders bevorzugt sind wasserunlösliche Bismuthaltige Katalysatoren. Insbesondere bevorzugt ist Bismut(III)-Subnitrat. Vorzugsweise enthält der erfindungsgemäße Elektrotauchlack wenigstens einen Bismut-haltigen Katalysator in einer solchen Menge, dass der Gehalt an Bismut(III), berechnet als Bismut-Metall, bezogen auf das Gesamtgewicht des erfindungsgemäßen Elektrotauchlacks in einem Bereich von 10 ppm bis 20 000 ppm liegt. Die Menge an Bismut, berechnet als Metall, kann mittels induktiv-gekoppelter Plasma-Atom-Emissionspektrometrie (ICP-OES) gemäß DIN EN ISO 11885 (Datum: September 2009) ermittelt werden.

Der erfindungsgemäße Elektrotauchlack kann je nach erwünschter Anwendung ein oder mehrere üblicherweise eingesetzte weitere(s) Additiv(e) enthalten. Vorzugsweise sind diese Additive ausgewählt aus der Gruppe bestehend aus Benetzungsmitteln, Emulgatoren, Dispergiermitteln, oberflächen-aktiven Verbindungen wie Tensiden, Verlaufshilfsmitteln, Löslichkeitsvermittlern, Entschäumungsmitteln, Rheologiehilfsmitteln, Antioxidantien, Stabilisierungsmitteln, vorzugsweise Hitze-Stabilisatoren, Prozess-Stabilisatoren und UV- und/oder LichtStabilisatoren, Flexibilisierungsmitten, Weichmachern und Gemischen aus den vorstehend genannten Additiven. Der Additiv-Gehalt kann je nach Verwendungszweck sehr breit variieren. Vorzugsweise liegt der Gehalt, bezogen auf das Gesamtgewicht des erfindungsgemäßen Elektrotauchlacks bei 0,1 bis 20,0 Gew.-%, bevorzugt bei 0,1 bis 15,0 Gew.-%, besonders bevorzugt bei 0,1 bis 10,0 Gew.-%, ganz besonders bevorzugt bei 0,1 bis 5,0 Gew.-% und insbesondere bei 0,1 bis 2,5 Gew.-%.

### Verfahren zur Elektrotauchlackierung

Ein weiterer Gegenstand der vorliegenden Erfindung ist ein Verfahren zur zumindest teilweisen Beschichtung eines elektrisch leitfähigen Substrates durch kathodische Elektrotauchlackierung, bei dem
(1) das elektrisch leitfähige Substrat zumindest teilweise in ein Elektrotauchbad getaucht wird, welches den erfindungsgemäßen Elektrotauchlack enthält,
(2) das Substrat als Kathode geschaltet wird,
(3) durch Gleichstrom ein Lackfilm auf dem Substrat abgeschieden wird,
(4) das lackierte Substrat aus dem Elektrotauchlackbad entfernt wird und
(5) der auf dem Substrat abgeschiedene Lackfilm eingebrannt wird.

Alle im Zusammenhang mit dem erfindungsgemäßen Elektrotauchlack hierin zuvor beschriebene bevorzugte Ausführungsformen sind auch bevorzugte Ausführungsformen hinsichtlich des vorstehend genannten erfindungsgemäßen Verfahrens unter Einsatz dieses Elektrotauchlacks zur zumindest teilweisen Beschichtung eines elektrisch leitfähigen Substrates durch kathodische Elektrotauchlackierung.

Das erfindungsgemäße Verfahren ist besonders zur Elektrotauchlackierung von Kraftfahrzeugkarosserien oder Teilen hiervon geeignet. Daher sind die bevorzugten Substrate Kraftfahrzeugkarosserien oder Teile hiervon.

Als erfindungsgemäß eingesetztes elektrisch leitfähiges Substrat eignen sich alle üblicherweise eingesetzten und dem Fachmann bekannten elektrisch leitfähigen Substrate. Vorzugsweise sind die erfindungsgemäß eingesetzten elektrisch leitfähigen Substrate ausgewählt aus der Gruppe bestehend aus Stahl, vorzugsweise Stahl ausgewählt aus der Gruppe bestehend aus kalt gewalztem Stahl, warmgewalztem Stahl verzinktem Stahl wie tauchverzinktem Stahl, legierungsverzinktem Stahl (wie beispielsweise Galvalume, Galvannealed oder Galfan) und aluminiertem Stahl, Aluminium und Magnesium sowie Zn/Mg-Legierungen und Zn/Ni-Legierungen. Als Substrate eignen sich insbesondere Teile von Karosserien oder vollständige Karosserien von zu produzierenden Automobilen.

Bevor das jeweilige elektrisch leitfähige Substrat in Schritt (1) eingesetzt wird, erfolgt vorzugsweise eine Reinigung und/oder Entfettung des Substrats.

Vorzugsweise ist das erfindungsgemäß eingesetzte elektrisch leitfähige Substrat ein mit wenigstens einem Metallphosphat wie Zinkphosphat vorbehandeltes Substrat. Eine solche Vorbehandlung mittels einer Phosphatierung, die üblicherweise nach Reinigung des Substrats und vor der Elektrotauchlackierung des Substrats gemäß Schritt (1) erfolgt, ist insbesondere ein in der Automobilindustrie üblicher Vorbehandlungsschritt.

Bei der Durchführung der Schritte (1), (2) und (3) des erfindungsgemäßen Verfahrens erfolgt eine kathodische Abscheidung des erfindungsgemäßen Elektrotauchlacks auf dem in das Bad gemäß Schritt (1) eingetauchtem Bereich des Substrats. Das Substrat wird gemäß Schritt (2) als Kathode geschaltet und es erfolgt ein Anlegen einer elektrischen Spannung zwischen dem Substrat und wenigstens einer Gegenelektrode, die sich in dem Tauchlackbad befindet oder davon separiert vorliegt, beispielsweise über eine für Anionen permeable Anionenaustauschermembran. Die Gegenelektrode fungiert dementsprechend als Anode. Beim Durchgang von elektrischem Strom zwischen Anode und Kathode wird ein fest haftender Lackfilm auf der Kathode, d.h. auf dem eingetauchten Teil des Substrats abgeschieden. Die angelegte Spannung liegt dabei vorzugsweise in einem Bereich von 50 bis 500 Volt. Bei der Durchführung der Schritte (1), (2) und (3) des erfindungsgemäßen Verfahrens weist das Elektrotauchbad vorzugsweise eine Tauchbadtemperatur in einem Bereich von 20 bis 45°C auf.

Vorzugsweise liegt die Einbrenntemperatur gemäß Schritt (5) in einem Bereich von 120 bis 185°C, besonders bevorzugt von 120 bis 180°C, ganz besonders bevorzugt von 120 bis 175°C, insbesondere von 125 bis 170°C oder von 125°C bis 165°C, am meisten bevorzugt von 130 bis 165°C oder von 130 bis 160°C.

### Substrat

Ein weiterer Gegenstand der vorliegenden Erfindung ist ein elektrisch leitfähiges Substrat, welches zumindest teilweise mit einem eingebrannten erfindungsgemäßen Elektrotauchlack beschichtet ist.

Alle im Zusammenhang mit dem erfindungsgemäßen Elektrotauchlack und dem erfindungsgemäßen Verfahren hierin zuvor beschriebene bevorzugte Ausführungsformen sind auch bevorzugte Ausführungsformen hinsichtlich des vorstehend genannten erfindungsgemäßen zumindest teilweise beschichteten Substrats.

### Verwendung

Ein weiterer Gegenstand der vorliegenden Erfindung ist eine Verwendung wenigstens eines Tris(alkoxycarbonylamino)-1,3,5-triazins in einem kathodisch abscheidbaren Elektrotauchlack in einem Anteil von wenigstens 25 Gew.-%, bezogen auf das Gesamtgewicht an Vernetzungsmittel in dem Elektrotauchlack, zur Reduzierung oder Eliminierung der Störungsempfindlichkeit des Elektrotauchlackbades gegenüber darin enthaltenen Verunreinigungen durch Phosphate und/oder durch andere Metallsalze, die durch der Elektrotauchlackierung vorgelagerte Vorbehandlungsschritte wie insbesondere einer vorgeschalteten Phosphatierung in das Elektrotauchlackbad verschleppt worden sind und/oder zur Erniedrigung der Einbrenntemperatur des Elektrotauchlacks bei einer zumindest teilweisen Beschichtung eines elektrisch leitfähigen Substrats auf eine Temperatur in einem Bereich von 125°C bis 165°C, bevorzugter von 130 bis 165°C oder von 130 bis 160°C. Vorzugsweise handelt es sich bei dem kathodisch abscheidbaren Elektrotauchlack dabei um den erfindungsgemäßen Elektrotauchlack, d.h. um einen Elektrotauchlack, der neben den Komponenten (a) und (b) wenigstens ein Vernetzungsmittel (c) enthält, wobei ein Anteil von wenigstens 25 Gew.-% des Vernetzungsmittels (c), bezogen auf das Gesamtgewicht des Vernetzungsmittels (c), durch wenigstens ein Tris(alkoxycarbonylamino)-1,3,5-triazin gebildet wird und der gegebenenfalls verbleibende Anteil durch wenigstens ein von dem wenigstens einen Tris(alkoxycarbonylamino)-1,3,5-triazin verschiedenen Vernetzungsmittel ausgewählt aus der Gruppe bestehend aus blockierten Polyisocyanaten, Aminoplasten und Mischungen davon gebildet wird. Vorzugsweise wird als Tris(alkoxycarbonylamino)-1,3,5-triazin wenigstens ein Tris(alkoxycarbonylamino)-1,3,5-triazins der vorstehend dargestellten allgemeinen Formel (I) eingesetzt.

Alle im Zusammenhang mit dem erfindungsgemäßen Elektrotauchlack, dem erfindungsgemäßen Verfahren und dem erfindungsgemäßen zumindest teilweise beschichteten Substrat hierin zuvor beschriebene bevorzugte Ausführungsformen sind auch bevorzugte Ausführungsformen hinsichtlich der vorstehend genannten Verwendung des wenigstens eines Tris(alkoxycarbonylamino)-1,3,5-triazins in einem kathodisch abscheidbaren Elektrotauchlack.

### Bestimmungsmethoden

### 1. Bestimmung des nicht-flüchtigen Anteils

Die Bestimmung des nicht-flüchtigen Anteils (des Festkörpers bzw. Festkörpergehalts) erfolgt gemäß DIN EN ISO 3251 (Datum: Juni 2008). Dabei werden 1 g Probe in eine vorher getrocknete Aluminiumschale eingewogen und 60 Minuten bei 130 °C im Trockenschrank getrocknet, im Exsikkator abgekühlt, und dann zurückgewogen. Der Rückstand bezogen auf die Gesamtmenge der eingesetzten Probe entspricht dem nicht-flüchtigen Anteil.

### 2. Bestimmung der mittleren Teilchengröße

Die mittlere Teilchengröße wird mittels dynamischer Lichtstreuung (Photonenkorrelationsspektroskopie) (PCS) in Anlehung an DIN ISO 13321 (Datum: Oktober 2004) bestimmt. Unter mittlerer Teilchengröße ist dabei der gemessene mittlere Partikeldurchmesser (Z-Average mean) zu verstehen ist. Zur Messung eingesetzt wird dabei ein "Malvern Nano S90" (Fa. Malvern Instruments) bei 25 ± 1 °C. Das Gerät deckt einen Größenbereich von 3 bis 3000 nm ab und ist ausgestattet mit einem 4mW He-Ne Laser bei 633 nm. Die jeweiligen Proben werden mit partikelfreiem, deionisierten Wasser als Dispergiermedium verdünnt und anschließend in einer 1 ml Polystyrol-Küvette bei geeigneter Streuintensität vermessen. Die Auswertung erfolgte mittels digitalem Korrelator unter Zuhilfenahme der Auswertungssoftware Zetasizer Vers. 7.11 (Fa. Malvern Instruments). Es wird fünf Mal gemessen und die Messungen an einer zweiten, frisch präparierten Probe wiederholt. Unter der mittleren Teilchengröße wird vorliegend das arithmetische Volumenmittel des gemessenen mittleren Partikeldurchmessers (V-Average mean) verstanden. Die Standardabweichung einer 5-fachen Bestimmung beträgt dabei ≤ 4 %. Die Überprüfung erfolgt mit Polystyrol-Standards mit zertifizierten Partikelgrößen zwischen 100 bis 200 nm.

### 3. Bestimmung der Glasübergangstemperaturen

Die Glasübergangstemperatur T_{g} wird experimentell in Anlehnung an DIN 51005 (Datum: August 2005) "Thermische Analyse (TA) - Begriffe" und DIN 53765 (Datum: März 1994) "Thermische Analyse ― Dynamische Differenzkalorimetrie (DDK)" bestimmt. Dabei wird eine Probe von 15 mg in ein Probenpfännchen eingewogen und in ein DSC-Gerät eingeführt. Es wird auf die Starttemperatur abgekühlt und im Anschluss daran ein 1. und ein 2. Messlauf bei einer Inertgasspülung (N₂) von 50 ml/min mit einer Heizrate von 10 K/min durchgeführt, wobei zwischen den Messläufen wieder auf die Starttemperatur abgekühlt wird. Die Messung erfolgt im Temperaturbereich von etwa 50 °C niedriger als die erwartete Glasübergangstemperatur bis etwa 50 °C höher als die erwartete Glasübergangstemperatur. Als Glasübergangstemperatur wird in Anlehnung an DIN 53765, Punkt 8.1, diejenige Temperatur im 2. Messlauf bezeichnet, bei der die Hälfte der Änderung der spezifischen Wärmekapazität (0,5 Delta cp) erreicht ist. Sie wird aus dem DDK-Diagramm (Auftragung des Wärmestroms gegen die Temperatur) ermittelt. Es handelt sich um die Temperatur, die dem Schnittpunkt der Mittellinie zwischen den extrapolierten Basislinien vor und nach dem Glasübergang mit der Messkurve entspricht. Für eine zielführende Abschätzung der bei der Messung zu erwartenden Glasübergangstemperatur kann die bekannte Fox-Gleichung herangezogen werden. Da die Fox-Gleichung eine gute Näherung darstellt, die auf den Glasübergangstemperaturen der Homopolymere und deren Gewichtsteilen ohne Einbeziehung des Molekulargewichts basiert, kann sie als zielführendes Hilfsmittel für den Fachmann bei der Synthese eingesetzt werden, sodass eine gewünschte Glasübergangstemperatur über wenige zielgerichtete Versuche eingestellt werden kann.

### 4. Bestimmung der Lösemittelbeständigkeit mittels des MEK-Tests angelehnt an DIN EN 13523-11 (Datum: September 2011)

Der MEK-Test dient zur Ermittlung der Beständigkeit von Lackfilmen gegen organische Lösemittel (Reib-Test). Ein Stück Mullkompresse (Art. Nr. 1225221 von der Römer Apotheke Rheinberg) wird mit einem Gummiband auf dem Kopf eines MEK-Hammers befestigt und dann mit MEK (Methylethylketon) als Lösemittel getränkt. Der Hammer wiegt 1200 g und hat einen Griff mit einer Auflagefläche von 2,5 cm². In den Hammer wird ebenfalls Lösemittel gefüllt, welches konstant in die Mullkompresse nachläuft. Dies garantiert, dass die Kompresse während des ganzen Tests tropfnass ist. Es wird mit der Kompresse auf einem zu untersuchenden beschichteten Prüfblech wie einem der in den Beispielen eingesetzten Prüfblechen einmal hinauf und herab gerieben (= 1 DH, eine Doppelreibung (Doppelhub)). Die Prüfstrecke beträgt dabei 9,5 cm. Hierbei ist 1 DH in 1 s durchzuführen. Dabei wird auf den Hammer keine zusätzliche Kraft ausgeübt. Der obere und untere Umkehrpunkt an den Prüfblechkanten wird nicht bewertet. Es werden die DH gezählt, die erforderlich sind, den gesamten Lackfilm auf dem Prüfblech bis zum Untergrund abzutragen und dieser Wert angegeben. Falls diese Abtragung nicht bis zum Erreichen von maximal 100 DH erreicht wird, wird nach maximal 100 DH abgebrochen.

### 5. Bestimmung der Korrosionsbeständigkeit

Die Bestimmung der Korrosionsbeständigkeit von Beschichtungen erfolgt durch einen Salzsprühnebeltest. Die Salzsprühnebelprüfung wird gemäß DIN EN ISO 9227 NSS (Datum: September 2012) für das zu untersuchende beschichtete Substrat durchgeführt. Die zu untersuchenden Proben werden dabei in einer Kammer, in der bei einer Temperatur von 35 °C kontinuierlich über eine Dauer von 360 Stunden eine 5%ige Kochsalzlösung mit kontrolliertem pH-Wert im Bereich von 6,5 bis 7,2 vernebelt wird. Der Nebel schlägt sich auf die zu untersuchenden Proben nieder und überzieht diese mit einem korrosiv wirkenden Salzwasserfilm.

Nach Durchführung der Salzsprühnebelprüfung gemäß DIN EN ISO 9227 NSS wird der Rostgrad (Flächenrost) der Proben gemäß DIN EN ISO 4628-3 (Datum: Januar 2004) untersucht. Die Beurteilung des Rostgrads erfolgt nach Noten (0 = rostfrei, 1 = ca. 1% rostbedeckte Fläche, 2 = ca. 3% rostbedeckte Fläche, 3 = ca. 10% rostbedeckte Fläche, 4 = ca. 30% rostbedeckte Fläche und 5 = ca. 50% rostbedeckte Fläche).

Wird die Beschichtung der zu untersuchenden Proben noch vor der Salzsprühnebelprüfung gemäß DIN EN ISO 9227 NSS mit einem Messerschnitt bis zum Substrat eingeritzt, so können die Proben hinsichtlich ihres Unterwanderungsgrades gemäß DIN EN ISO 4628-8 (Datum März 2013) untersucht werden, da das Substrat während der Salzsprühnebelprüfung gemäß DIN EN ISO 9227 NSS entlang der Ritzlinie korrodiert. Durch den fortschreitenden Korrosionsvorgang wird die Beschichtung während der Prüfung mehr oder weniger stark unterwandert. Der Unterwanderungsgrad in [mm] ist ein Maß für die Beständigkeit der Beschichtung gegen Korrosion.

### 6. Bestimmung der Wetterbeständigkeit

Zur Bestimmung der Wetterbeständigkeit werden die zu untersuchenden beschichteten Proben ohne Decklackaufbau für 240 h nacheinander einer Bewitterung nach DIN EN ISO 16474-1 (Datum: März 2014), DIN EN ISO 16474-2 (Datum: März 2014), DIN EN ISO 4892-1 (Datum: März 2014) und DIN EN ISO 4892-2 Datum: Juni 2013) unterworfen. Vor und nach der Bewitterung wurde der Glanzgrad der Beschichtung dem Micro-TRI-Gloss-Gerät der Firma Byk-Gardner gemessen. Ebenfalls vor und nach der Bewitterung wurde der Farbwert b (CIELAB bei 45°; ungewichtet) mit dem Gerät MA60 der Firma X-Rite bestimmt.

### Beispiele und Vergleichsbeispiele

Die nachfolgenden Beispiele und Vergleichsbeispiele dienen der Erläuterung der Erfindung, sind jedoch nicht einschränkend auszulegen. Sofern nicht anders angeführt, handelt es sich bei den Angaben in Teilen um Gewichtsteile und bei Angaben in Prozenten jeweils um Gewichtsprozente.

### 1. Herstellung eines nicht-erfindungsgemäß eingesetzten Vernetzungsmittels V1

Das Vernetzungsmittel V1 wird hergestellt wie in der WO 2009/021719 A2 auf Seite 10, Zeilen 1 bis 13 unter Punkt 1.1 innerhalb von Beispiel 1 beschrieben ist. Bei V1 handelt es sich um ein konventionelles blockiertes Polyisocyanat.

### 2. Herstellung von Mischungen von Epoxid-Amin-Addukten und Vernetzungsmitteln

### 2.1 Herstellung einer wässrigen Bindemitteldispersion D1 (nicht-erfindungsgemäß)

Die wässrige Bindemitteldispersion D1 wird hergestellt wie in der DE 197 03 869 A1, Beispiel 2.3 (Bindemitteldispersion C), Seite 7, Zeile 59 bis Seite 8, Zeile 26 beschrieben ist, d.h. unter Einsatz des Vernetzungsmittels V1.

### 2.2 Herstellung der wässrigen Bindemitteldispersion D2 (erfindungsgemäß)

Die wässrige Bindemitteldispersion D2 wird hergestellt wie unter Punkt 2.1 im Zusammenhang mit der Bindemitteldispersion D1 unter Verweis auf die entsprechenden Passagen der DE 197 03 869 A1 beschrieben ist, wobei jedoch anstelle der 812 Teile des Vernetzungsmittels V1 812 Teile eines Tris(alkoxycarbonylamino)-Triazin-Vernetzers, nämlich des kommerziell erhältlichen Produkts HTB-S der Firma HOS-Technik GmbH, eingerührt wurden. Die resultierende Dispersion D2 weist einen Festkörpergehalt von 45,5 Gew.-% und einem pH-Wert von 6,0 auf. Die mittlere Teilchengröße der in der Dispersion enthaltenen Partikel liegt bei 140 nm.

### 3. Herstellung von Pigmentpasten

### 3.1 Herstellung einer Reibharzdispersion R1

Gemäß EP 0 505 445 B1, Beispiel 1.3 (Reibharz A 3), Seite 9, Zeilen 29-49 stellt man ein Reibharz her. Nach der in der vorstehend genannten Druckschrift beschriebenen Herstellung wird zusätzlich mit 2,82 Teilen Eisessig und 13,84 Teilen deionisiertem Wasser neutralisiert und verdünnt. Der Feststoffgehalt der resultierenden Reibharzdispersion wird dadurch auf 60 Gew.-% abgesenkt.

### 3.2 Herstellung der wässrigen Pigmentpaste P1

Die in nachstehender Tabelle 1 aufgeführten Komponenten werden nacheinander zu einem schnelllaufenden Dissolver-Rührwerk gegeben und für eine Dauer von 30 Minuten gemischt:

**Tabelle 1:**

| **Gewichtsteile** | **Komponente** |
|---|---|
| 32,3 | deionisiertes Wasser |
| 24,1 | Reibharzdispersion R1 |
| 5.6 | Aluminiumsilikat Extender (ASP2001) |
| 0,6 | Ruß |
| 32,7 | Titandioxid (TI-PURE R 900, DuPont) |
| 4.7 | Bismutsubnitrat (Bi-Gehalt 71-74%) |
| Σ100 | |

Anschließend wird die Mischung in einer Labor-Rührwerksmühle während einer Dauer von 1-2 h zu einer Hegman-Feinheit von 12 µm dispergiert und gegebenenfalls mit weiterem entmineralisierten Wasser auf die gewünschte Verarbeitungsviskosität eingestellt.

### 3.3 Herstellung der wässrigen Pigmentpaste P2

Die wässrige Pigmentpaste P2 wird hergestellt wie unter Punkt **3.2** im Zusammenhang mit der Pigmentpaste P1 beschrieben ist, wobei jedoch P2 kein Bismutsubnitrat enthält. Stattdessen werden 37,4 Gewichtsteile Titandioxid anstelle von 32,7 Gewichtsteilen zur Herstellung von P2 verwendet.

### 4. Herstellung von Elektrotauchlacken

**4.1** Die in nachstehender Tabelle 2 aufgeführten Komponenten werden zu kathodisch abscheidbaren Elektrotauchlacken (**ETL1** bis **ETL5**) verarbeitet. Dabei wird jeweils die jeweils eingesetzte Bindemitteldispersion vorgelegt und mit deionisiertem Wasser verdünnt sowie gegebenenfalls Phosphorsäure hinzugefügt. Anschließend wird unter Rühren die jeweilige Pigmentpaste eingetragen. Die Mengenangaben in Tabelle 2 stellen jeweils Gewichtsteile dar. Die Elektrotauchlacke **ETL1** und **ETL3** sind Vergleichsbeispiele. Die Elektrotauchlacke **ETL2, ETL4** und **ETL5** sind erfindungsgemäße Beispiele.

**Tabelle 2:**

| **Eingesetzte Komponenten** | **ETL1** | **ETL2** | **ETL3** | **ETL4** | **ETL5** |
|---|---|---|---|---|---|
| Bindemitteldispersion D1 | 2110 | - | 2110 | - | - |
| Bindemitteldispersion D2 | - | 2110 | - | 2110 | 2110 |
| Pigmentpaste P1 | 305 | 305 | 305 | 305 | - |
| Pigmentpaste P2 | - | - | - | - | 305 |
| Deionisiertes Wasser | 2585 | 2585 | 2580,9 | 2580,9 | 2585 |
| Phosphorsäure (85%ig) | - | - | 4,1 | 4,1 | - |

Der Einsatz von Phosphorsäure bei der Herstellung von **ETL3** (im Vergleich zu **ETL1**) bzw. bei der Herstellung von **ETL4** (im Vergleich zur Herstellung von **ETL2**) dient zur Simulation einer (unerwünschten) Phosphatverschleppung: Phosphatverschleppungen in ETL-Anlagen üblich, da entsprechende Elektrotauchlackbäder üblicherweise wenigstens geringe Mengen an Phosphaten enthalten, wenn die Vorbehandlung des eingesetzten Substrats mittels Phosphatierung erfolgt (mehr als 95% aller Vorbehandlungen in der Automobilindustrie sind Phosphatierungen).

**4.2** 100 Gew.-% des Vernetzungsmittels des erfindungsgemäßen Elektrotauchlacks **ETL4** ist ein Tris(alkoxycarbonylamino)-Triazin-Vernetzer. 100 Gew.-% des Vernetzungsmittels des nicht-erfindungsgemäßen Elektrotauchlacks **ETL3** werden durch ein konventionelles blockiertes Polyisocyanat gebildet. Zur Untersuchung des Einflusses des Anteils an Tris(alkoxycarbonylamino)-Triazin-Vernetzer in den Elektrotauchlacken wurde durch Herstellung unterschiedlicher Mischungen von **ETL3** und **ETL4** eine Reihe von weiteren Elektrotauchlacken hergestellt, nämlich die Elektrotauchlacke **ETL6** bis **ETL9.**

Die Mengen an Tris(alkoxycarbonylamino)-Triazin-Vernetzer (TACT) und Vernetzungsmittel V1 innerhalb dieser Elektrotauchlacke **ETL6** bis **ETL9,** liegen dabei so, dass, jeweils bezogen auf das Gesamtgewicht aller eingesetzten Vernetzungsmittel,
in **ETL6** der Anteil an TACT bei 20 Gew.-% und der Anteil an V1 bei 80 Gew.-%,
in **ETL7** der Anteil an TACT bei 30 Gew.-% und der Anteil an V1 bei 70 Gew.-%,
in **ETL8** der Anteil an TACT bei 40 Gew.-% und der Anteil an V1 bei 60 Gew.-%, und
in **ETL9** der Anteil an TACT bei 50 Gew.-% und der Anteil an V1 ebenfalls bei 50 Gew.-%,
liegt. Elektrotauchlack **ETL6** ist daher ein nicht-erfindungsgemäßer Elektrotauchlack, wohingegen **ETL7** bis **ETL9** erfindungsgemäße Elektrotauchlacke sind.

### 5. Untersuchung und Prüfung der Elektrotauchlacke

### 5.1 Untersuchung der Glasübergangstemperaturen

Zur Bestimmung der Glasübergangstemperaturen (T_{g}) werden aus den Elektrotauchlacken **ETL1, ETL2** und **ETL5** Lackfilme innerhalb von 2 Minuten bei einer Abscheidespannung von 220-350 V und einer Tauchbadtemperatur von 28-34°C auf kathodisch geschalteten, phosphatierten Prüftafeln abgeschieden. Im Anschluss werden die Prüfbleche für 15 Minuten bei 175°C (Objekttemperatur) eingebrannt. Danach werden die Glasübergangstemperaturen gemäß vorstehend beschriebener Methode bestimmt. Die Ergebnisse sind in Tabelle 3 dargestellt.

**Tabelle 3:**

| | **ETL1** (Vergleich) | **ETL2** (erfindungsgemäß) | **ETL5** (erfindungsgemäß) |
|---|---|---|---|
| Glasübergangstemperatur [°C] | 87 | 115 | 114 |

Die Ergebnisse in Tabelle 3 zeigen, dass die erfindungsgemäßen Elektrotauchlacke **ETL2** und **ETL5** im Vergleich zum herkömmlichen Produkt **ETL1** eine deutlich höhere Glasübergangstemperatur aufweisen. Dabei ist insbesondere zu beachten, dass **ETL5** katalysatorfrei ist.

### 5.2 Untersuchung des Vernetzungszustands bzw. der Lösemittelbeständigkeit

Zur Bestimmung des Vernetzungszustandes werden aus den Elektrotauchlacken **ETL1** und **ETL2** Lackfilme innerhalb von 2 Minuten bei einer Abscheidespannung von 220-350 V und einer Tauchbadtemperatur von 28-34°C auf kathodisch geschalteten, phosphatierten Prüftafeln abgeschieden. Im Anschluss werden die Prüfbleche für 15 Minuten bei verschiedenen Objekttemperaturen eingebrannt. Zur Prüfung des Vernetzungszustandes der eingebrannten Lackfilme wurde die Lösemittelbeständigkeit nach DIN EN 13523-11 (Datum: September 2011) (MEK-Test, d.h. Lösemittelbeständigkeit gegenüber Methylethylketon (MEK) gemäß der vorstehend beschriebene Methode ermittelt. Die Ergebnisse sind in Tabelle 4 dargestellt.

**Tabelle 4:**

| Einbrenntemperatur [°C] | **ETL1** (Vergleich): Anzahl Doppelhübe (DH) | **ETL2** (erfindungsgemäß): Anzahl Doppelhübe (DH) |
|---|---|---|
| 120 | 5 | 70 |
| 130 | 8 | 100 |
| 140 | 15 | 100 |
| 150 | 65 | 100 |
| 160 | 100 | 100 |
| 175 | 100 | 100 |

Aus den Daten ist ersichtlich, dass die Vernetzungsreaktion im erfindungsgemäßen Elektrotauchlack **ETL2** schon bei Einbrenntemperaturen von 120°C ausreichend ist, wohingegen für das Vergleichsbeispiel **ETL1** Einbrenntemperaturen von wenigstens 150°C erforderlich sind.

### 5.3 Untersuchung der Vernetzungsdynamik mittels Kohlefasernetz

Zur Bestimmung der Vernetzungs-Onset-Temperatur (Vernetzungsbeginn) werden mittels den Elektrotauchlacken **ETL1** bis **ETL5** Lackfilme innerhalb von 2 Minuten bei einer Abscheidespannung von 110-150 V und einer Tauchbadtemperatur von 28-34°C auf einem Kohlefasernetz abgeschieden. Die Ermittlung der Vernetzungs-Onset-Temperatur erfolgt durch Einbringen der Netze in eine DMA (dynamischmechanische Analyse). Die Ergebnisse sind in Tabelle 5 dargestellt.

**Tabelle 5:**

| Beispiel/Vergleichsbeispiel | Onset-Temperatur E'-Verlauf [°C] |
|---|---|
| **ETL1** (Vergleich) | 146 |
| **ETL2** (erfindungsgemäß) | 116 |
| **ETL3** (Vergleich) | 160 |
| **ETL4** (erfindungsgemäß) | 116 |
| **ETL5** (erfindungsgemäß) | 118 |

Die Ergebnisse zeigen, dass die Vernetzungs-Onset-Temperatur der erfindungsgemäßen Beispiele **ETL2, ETL4** und **ETL5** deutlich niedriger (116°C) liegen als die der herkömmlichen Produkte **ETL1** und **ETL3** (146 bzw. 160°C). Dadurch ist eine Vernetzung der erfindungsgemäßen Beispiele **ETL2, ETL4** und **ETL5** bereits bei Temperaturen von ca. 120 -130°C möglich. Besonders zu beachten ist das Ergebnis für **ETL5,** da dieser Lack katalysatorfrei ist (enthält kein BismutSubnitrat), aber im Onset dennoch vergleichbare Werte zu dem katalysierten System **ETL2** aufweist.

In Tabelle 6 werden zudem die ebenfalls mittels der DMA-Analyse erhaltenen extrapolierten Vernetzungs-Offset-Zeiten (Vernetzungsdauer) in Minuten bei unterschiedlichen Temperaturen miteinander verglichen. Dabei wird insbesondere der Einfluss von in den Elektrotauchlacken enthaltenem Phosphat auf die benötigte Vernetzungsdauer untersucht. Verschleppungen von Phosphat (durch Hohlräume, etc.) aus der Vorbehandlung kommen in den Automobillinien trotz intensiver Waschprozesse häufig vor und beeinträchtigen damit die Aushärtung der Tauchlackierung, insbesondere an Masseteilen, die sich langsamer und weniger stark aufheizen lassen.

**Tabelle 6:**

| *Extrapolierte Offset-Zeiten [min]* | | | | |
|---|---|---|---|---|
| *Messbedingung* | **ETL1** (Vergleich, enthaltend kein Phosphat) | **ETL2** (erfindungsgemäß, enthaltend kein Phosphat) | **ETL3 ETL4** (Vergleich, (erfindungsenthaltend gemäß, Phosphat) enthaltend Phosphat) | |
| 120°C | keine Vernetzung | 53 | keine Vernetzung | 56 |
| 130°C | keine Vernetzung | 38 | keine Vernetzung | 39 |
| 150°C | keine Vernetzung | 22 | keine Vernetzung | 23 |
| 175°C | 23 | 16 | 40 | 17 |

Aus einem Vergleich von **ETL4** und **ETL2** gemäß Tabelle 6 ist ersichtlich, dass der erfindungsgemäße Elektrotauchlack **ETL2** nahezu keine Reaktion auf eine Phosphatzugabe aufweist (simuliert in **ETL4**), während der Vergleichslack **ETL1** im Fall einer Phosphatzugabe wie durch den Vergleichslack **ETL3** simuliert sehr stark in seiner Vernetzung eingeschränkt ist, d.h. deutlich mehr Zeit für die Vernetzung braucht (40 Minuten im Fall von **ETL3** bei 175°C anstelle von 23 Minuten im Fall von **ETL1** bei 175°C).

Zusätzlich zu den Onset- und Offset-Messungen gemäß den Tabellen 5 und 6 können auch die MEK-Doppelhübe als Maß der Lösemittelbeständigkeit gegen das Lösemittel MEK wie unter Punkt **5.2** beschrieben zur Bestimmung des Vernetzungszustands und damit als Maß für Vernetzung bestimmt und vergleichen werden. Dabei werden aus den Elektrotauchlacken **ETL1** bis **ETL4** Lackfilme innerhalb von 2 Minuten bei einer Abscheidespannung von 220-350 V und einer Tauchbadtemperatur von 28-34°C auf kathodisch geschalteten, phosphatierten Prüftafeln abgeschieden. Im Anschluss werden die Prüfbleche für 15 Minuten bei verschiedenen Objekttemperaturen (150, 160 bzw. 175°C) eingebrannt. Zur Prüfung des Vernetzungszustandes der eingebrannten Lackfilme wurde die Lösemittelbeständigkeit nach DIN EN 13523-11 (Datum: September 2011) (MEK-Test, d.h. Lösemittelbeständigkeit gegenüber Methylethylketon (MEK) gemäß der vorstehend beschriebene Methode ermittelt. Die Ergebnisse sind in Tabelle 7 dargestellt. Die Zahlenwerte stellen die Anzahl an ermittelten Doppelhüben (DH) dar.

**Tabelle 7:**

| Beispiel/Vergleichsbeispiel | *150°C* | *160°C* | *175°C* |
|---|---|---|---|
| **ETL1** (Vergleich, enthaltend kein Phosphat) | 65 | 100 | 100 |
| **ETL3** (Vergleich, enthaltend Phosphat) | 7 | 20 | 60 |
| **ETL2** (erfindungsgemäß, enthaltend kein Phosphat) | 100 | 100 | 100 |
| **ETL4** (erfindungsgemäß, enthaltend Phosphat) | 100 | 100 | 100 |

Aus einem Vergleich von **ETL4** und **ETL2** gemäß Tabelle 7 ist ersichtlich, dass der erfindungsgemäße Elektrotauchlack **ETL2** keine Reaktion auf eine Phosphatzugabe aufweist (simuliert in **ETL4**), während der Vergleichslack **ETL1** im Fall einer Phosphatzugabe wie durch den Vergleichslack **ETL3** simuliert wesentlich unbeständiger gegen das Lösemittel MEK ist.

### 5.4 Prüfung auf Korrosionsbeständigkeit

Zur Bestimmung der Korrosionsbeständigkeit werden aus den Elektrotauchlacken **ETL1** und **ETL2** Lackfilme innerhalb von 2 Minuten bei einer Abscheidespannung von 220-350 V und einer Tauchbadtemperatur von 28-34°C auf kathodisch geschalteten, phosphatierten Prüftafel abgeschieden und eingebrannt. Diese Prüftafeln werden gemäß der vorstehend beschriebenen Methode einer Salzsprühnebelprüfung unterworfen und anschließend wird der Rostgrad (Flächenrost) der Proben bestimmt. Die entsprechenden Ergebnisse sind in der nachfolgenden Tabelle 8 aufgeführt.

**Tabelle 8:**

| Beispiel/Vergleichsbeispiel | Unterwanderung gemäß DIN EN ISO 4628-8 nach Durchführung einer Salzsprühnebelprüfung nach DIN EN ISO 9227 NSS [mm] | Flächenrost gemäß DIN EN ISO 4628-3 nach Durchführung einer Salzsprühnebelprüfung nach DIN EN ISO 9227 NSS [Note] |
|---|---|---|
| **ETL1** | 1 | 1 |
| **ETL2** | 1 | 1 |

### 5.5 Prüfung der Wetterbeständigkeit

Zur Bestimmung der Wetterbeständigkeit werden mittels der Elektrotauchlacke **ETL1** und **ETL2** Lackfilme innerhalb von 2 Minuten bei einer Abscheidespannung von 220-350 V und einer Tauchbadtemperatur von 28-34°C auf kathodisch geschalteten, phosphatierten Prüftafel abgeschieden und bei 175°C eingebrannt. Die Tafeln werden ohne Decklackaufbau für 240 h gemäß der vorstehend beschriebenen Methode Bewitterungen (WOM) nach DIN EN ISO 16474-1, DIN EN ISO 16474-2, DIN EN ISO 4892-1 und DIN EN ISO 4892-2 unterworfen und davor (unbelastet) und im Anschluss Glanzgrad und Farbwert bestimmt. Die Ergebnisse sind in Tabelle 9 dargestellt.

**Tabelle 9:**

| *Messung vor und nach 240 h WOM-Belastung* | **ETL1** (Vergleich) | **ETL 2** (erfindungsgemäß) |
|---|---|---|
| Glanzgrad 60° unbelastet | 79 | 74 |
| Glanzgrad 60° nach WOM-Belastung | < 16 | >55 |
| Delta b (vor/nach WOM-Belastung) | jeweils > 7,5 | jeweils < 2,5 |

Die Ergebnisse zeigen deutlich, dass der erfindungsgemäße Elektrotauchlack **ETL2** weniger verkreidet (= bessere Glanzhaltung aufweist) und weniger vergilbt, also in Summe weniger durch kurzwelliges Licht zersetzt wird als der Vergleichslack **ETL1.** Das ist speziell für primerlose Verfahren, in denen die Gefahr der Zersetzung der Tauchlackierungsschicht durch UV-Strahlen gegeben ist, von Bedeutung.

### 5.6 Weitere Untersuchungen der Vernetzung und der Phosphatempfindlichkeit

Es wurde die Anzahl an mittleren MEK-Doppelhübe als Maß der Lösemittelbeständigkeit gegen das Lösemittel MEK wie unter Punkt **5.2** und Punkt **5.3** beschrieben zur Bestimmung des Vernetzungszustands und damit als Maß für Vernetzung bestimmt. Dabei werden aus den phosphathaltigen Elektrotauchlacken **ETL3, ETL4** und **ETL6** bis **ETL9** Lackfilme innerhalb von 2 Minuten bei einer Abscheidespannung von 220-350 V und einer Tauchbadtemperatur von 28-34°C auf kathodisch geschalteten, phosphatierten Prüftafeln abgeschieden. Im Anschluss werden die Prüfbleche für 15 Minuten bei einer Objekttemperatur von 160°C eingebrannt. Zur Prüfung des Vernetzungszustandes der eingebrannten Lackfilme wurde die Lösemittelbeständigkeit nach DIN EN 13523-11 (Datum: September 2011) (MEK-Test, d.h. Lösemittelbeständigkeit gegenüber Methylethylketon (MEK) gemäß der vorstehend beschriebene Methode ermittelt. Die Ergebnisse sind in Tabelle 10 dargestellt. Die Zahlenwerte stellen die Anzahl an ermittelten Doppelhüben (DH) bei einer Objekttemperatur von 160°C dar.

**Tabelle 10:**

| Beispiel/Vergleichsbeispiel | 160°C |
|---|---|
| **ETL3** (Vergleich, enthaltend 0 Gew.-% an TACT)* | 20 |
| **ETL6** (Vergleich, enthaltend 20 Gew.-% an TACT)* | 50 |
| **ETL7** (erfindungsgemäß, enthaltend 30 Gew.-% an TACT)* | 100 |
| **ETL8** (erfindungsgemäß, enthaltend 40Gew.-% an TACT)* | 100 |
| **ETL9** (erfindungsgemäß, enthaltend 50 Gew.-% an TACT)* | 100 |
| **ETL4** (erfindungsgemäß, enthaltend 100 Gew.-% an TACT)* | 100 |

| | |
|---|---|
| Die Angaben in Gew.-% beziehen sich jeweils auf das Gesamtgewicht an Vernetzungsmittel(n) in dem jeweiligen Elektrotauchlack | |

Aus Tabelle 10 ist ersichtlich, dass die erfindungsgemäßen Elektrotauchlacke **ETL7** bis **ETL9** und **ETL4** keine Reaktion auf eine Phosphatzugabe aufweisen, während die Vergleichslacke **ETL3** und **ETL6** im Fall einer simulierten Phosphatzugabe wesentlich unbeständiger gegen das Lösemittel MEK sind als **ETL7** bis **ETL9** und **ETL4**.

## Patentansprüche

1. Ein kathodisch abscheidbarer wässriger Elektrotauchlack enthaltend
(a) wenigstens ein Epoxid-Amin-Addukt,
(b) wenigstens ein Pigment und/oder wenigstens einen Füllstoff und
(c) wenigstens ein Vernetzungsmittel
**dadurch gekennzeichnet, dass** ein Anteil von wenigstens 25 Gew.-% des Vernetzungsmittels (c), bezogen auf das Gesamtgewicht des Vernetzungsmittels (c), durch wenigstens ein Tris(alkoxycarbonylamino)-1,3,5-triazin gebildet wird und der gegebenenfalls verbleibende Anteil durch wenigstens ein von dem wenigstens einen Tris(alkoxycarbonylamino)-1,3,5-triazin verschiedenen Vernetzungsmittel ausgewählt aus der Gruppe bestehend aus blockierten Polyisocyanaten, Aminoplasten und Mischungen davon gebildet wird.

2. Der Elektrotauchlack nach Anspruch 1, **dadurch gekennzeichnet, dass** ein Anteil von wenigstens 30 Gew.-% des Vernetzungsmittels (c), bezogen auf das Gesamtgewicht des Vernetzungsmittels (c), durch wenigstens ein Tris(alkoxycarbonylamino)-1,3,5-triazin gebildet wird.

3. Der Elektrotauchlack nach Anspruch 1 oder 2, **dadurch gekennzeichnet, dass** ein Anteil von wenigstens 35 Gew.-% des Vernetzungsmittels (c), bezogen auf das Gesamtgewicht des Vernetzungsmittels (c), durch wenigstens ein Tris(alkoxycarbonylamino)-1,3,5-triazin gebildet wird.

4. Der Elektrotauchlack nach einem der vorstehenden Ansprüche, **dadurch gekennzeichnet, dass** Komponente (c) in einer Menge in einem Bereich von 5 bis 45 Gew.-% im Elektrotauchlack, bezogen auf den gesamten Festkörpergehalt des Elektrotauchlacks, enthalten ist.

5. Der Elektrotauchlack nach einem der vorstehenden Ansprüche, **dadurch gekennzeichnet, dass** als Tris(alkoxycarbonylamino)-1,3,5-triazin wenigstens ein Tris(alkoxycarbonylamino)-1,3,5-triazin der allgemeinen Formel (I) vorliegt 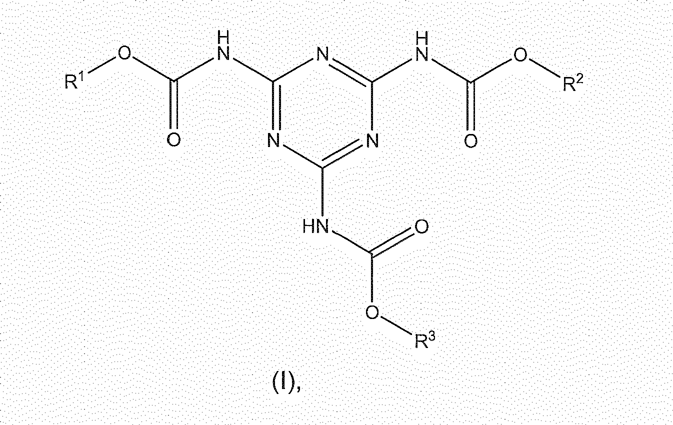 in der die Reste R¹, R² und R³ jeweils unabhängig voneinander für C₁-C₈-Alkylgruppen stehen.

6. Der Elektrotauchlack nach Anspruch 5, **dadurch gekennzeichnet, dass** die Reste R¹, R² und R³ jeweils unabhängig voneinander für C₁-C₄-Alkylgruppen stehen.

7. Der Elektrotauchlack nach einem der vorstehenden Ansprüche, **dadurch gekennzeichnet, dass** Komponente (b) in einer Menge in einem Bereich von 0,5 bis 17,5 Gew.-% im Elektrotauchlack, bezogen auf das Gesamtgewicht des Elektrotauchlacks, enthalten ist.

8. Der Elektrotauchlack nach einem der vorstehenden Ansprüche, **dadurch gekennzeichnet, dass** das relative Gewichtsverhältnis der Komponenten (a) und (c) zueinander im Elektrotauchlack in einem Bereich von 5:1 bis 1,1:1 liegt.

9. Der Elektrotauchlack nach einem der vorstehenden Ansprüche, **dadurch gekennzeichnet, dass** das Epoxid-Amin-Addukt (a) ein Umsetzungsprodukt wenigstens eines Epoxidharzes auf der Basis von Bisphenol A und wenigstens eines primären und/oder sekundären Amins und/oder deren Salzen und/oder wenigstens einem Salz eines tertiären Amins ist.

10. Ein Verfahren zur zumindest teilweisen Beschichtung eines elektrisch leitfähigen Substrates durch kathodische Elektrotauchlackierung, bei dem
(1) das elektrisch leitfähige Substrat zumindest teilweise in ein Elektrotauchbad getaucht wird, welches den Elektrotauchlack nach einem der Ansprüche 1 bis 9 enthält,
(2) das Substrat als Kathode geschaltet wird,
(3) durch Gleichstrom ein Lackfilm auf dem Substrat abgeschieden wird,
(4) das lackierte Substrat aus dem Elektrotauchlackbad entfernt wird und
(5) der auf dem Substrat abgeschiedene Lackfilm eingebrannt wird.

11. Das Verfahren nach Anspruch 10, **dadurch gekennzeichnet, dass** die Einbrenntemperatur gemäß Schritt (5) in einem Bereich von 125 bis 165°C liegt.

12. Das Verfahren nach Anspruch 10 oder 11, **dadurch gekennzeichnet, dass** das in Schritt (1) eingesetzte elektrisch leitfähige Substrat ein mit wenigstens einem Metallphosphat vorbehandeltes Substrat ist.

13. Ein elektrisch leitfähiges Substrat, welches zumindest teilweise mit einem eingebrannten Elektrotauchlack nach einem der Ansprüche 1 bis 9 beschichtet ist und/oder welches nach dem Verfahren gemäß einem der Ansprüche 11 und 12 erhältlich ist.

14. Eine Verwendung wenigstens eines Tris(alkoxycarbonylamino)-1,3,5-triazins in einem kathodisch abscheidbaren Elektrotauchlack in einem Anteil von wenigstens 25 Gew.-%, bezogen auf das Gesamtgewicht an Vernetzungsmittel in dem Elektrotauchlack, zur Reduzierung oder Eliminierung der Störungsempfindlichkeit des Elektrotauchlackbades gegenüber darin enthaltenen Verunreinigungen durch Phosphate und/oder durch andere Metallsalze, die durch der Elektrotauchlackierung vorgelagerte Vorbehandlungsschritte in das Elektrotauchlackbad verschleppt worden sind, und/oder zur Erniedrigung der Einbrenntemperatur des Elektrotauchlacks bei einer zumindest teilweisen Beschichtung eines elektrisch leitfähigen Substrats auf eine Temperatur in einem Bereich von 125°C bis 165°C.

15. Die Verwendung nach Anspruch 14, **dadurch gekennzeichnet, dass** als Tris(alkoxycarbonylamino)-1,3,5-triazin wenigstens ein Tris(alkoxycarbonylamino)-1,3,5-triazin der allgemeinen Formel (I) 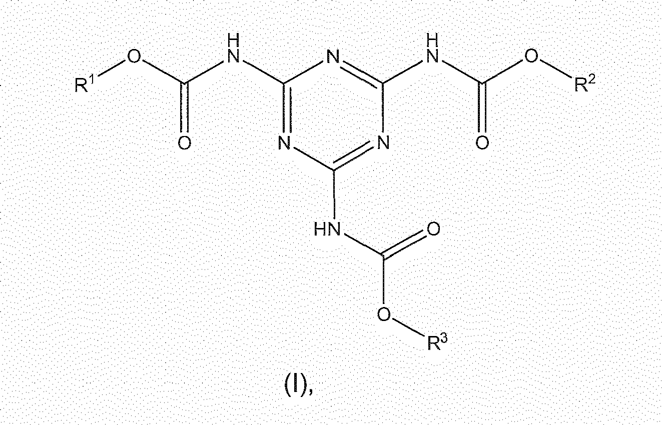 eingesetzt wird, in der die Reste R¹, R² und R³ jeweils unabhängig voneinander für C₁₋C₈-Alkylgruppen stehen.

## Claims

1. A cathodically depositable aqueous electrodeposition coating material comprising
(a) at least one epoxide-amine adduct,
(b) at least one pigment and/or at least one filler, and
(c) at least one crosslinking agent,
**characterized in that** a fraction of at least 25 wt% of the crosslinking agent (c), based on the total weight of the crosslinking agent (c), is formed by at least one tris(alkoxycarbonylamino)-1,3,5-triazine and any remaining fraction is formed by at least one crosslinking agent which is different from the at least one tris(alkoxycarbonylamino)-1,3,5-triazine and is selected from the group consisting of blocked polyisocyanates, amino resins, and mixtures thereof.

2. The electrodeposition coating material according to Claim 1, **characterized in that** a fraction of at least 30 wt% of the crosslinking agent (c), based on the total weight of the crosslinking agent (c), is formed by at least one tris(alkoxycarbonylamino)-1,3,5-triazine.

3. The electrodeposition coating material according to Claim 1 or 2, **characterized in that** a fraction of at least 35 wt% of the crosslinking agent (c), based on the total weight of the crosslinking agent (c), is formed by at least one tris(alkoxycarbonylamino)-1,3,5-triazine.

4. The electrodeposition coating material according to any of the preceding claims, **characterized in that** component (c) is included in an amount in a range from 5 to 45 wt% in the electrodeposition coating material, based on the total solids content of the electrodeposition coating material.

5. The electrodeposition coating material according to any of the preceding claims, **characterized in that** said tris(alkoxycarbonylamino)-1,3,5-triazine comprises at least one tris(alkoxycarbonylamino)-1,3,5-triazine of the general formula (I) 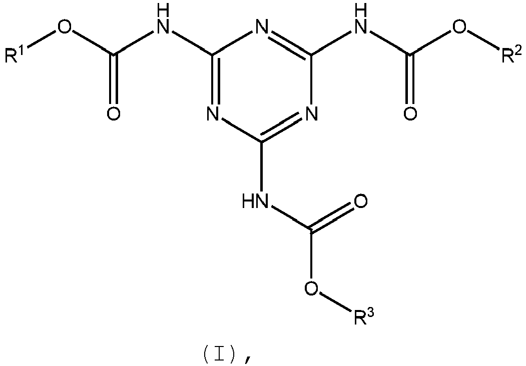 in which the radicals R¹, R², and R³ each independently of one another are C₁-C₈ alkyl groups.

6. The electrodeposition coating material according to Claim 5, **characterized in that** the radicals R¹, R², and R³ each independently of one another are C₁-C₄ alkyl groups.

7. The electrodeposition coating material according to any of the preceding claims, **characterized in that** component (b) is included in an amount in a range from 0.5 to 17.5 wt% in the electrodeposition coating material, based on the total weight of the electrodeposition coating material.

8. The electrodeposition coating material according to any of the preceding claims, **characterized in that** the relative weight ratio of components (a) and (c) to one another in the electrodeposition coating material is in a range from 5:1 to 1.1:1.

9. The electrodeposition coating material according to any of the preceding claims, **characterized in that** the epoxide-amine adduct (a) is a reaction product of at least one epoxy resin based on bisphenol A and at least one primary and/or secondary amine and/or salts thereof and/or at least one salt of a tertiary amine.

10. A method for at least partially coating an electrically conductive substrate by cathodic electrodeposition coating, in which
(1) the electrically conductive substrate is immersed at least partially into an electrodeposition coating bath which comprises the electrodeposition coating material according to any of Claims 1 to 9,
(2) the substrate is connected as cathode,
(3) a coating film is deposited on the substrate using direct current,
(4) the coated substrate is removed from the electrodeposition coating bath, and
(5) the coating film deposited on the substrate is baked.

11. The method according to Claim 10, **characterized in that** the baking temperature according to step (5) is in a range from 125 to 165°C.

12. The method according to Claim 10 or 11, **characterized in that** the electrically conductive substrate used in step (1) is a substrate pretreated with at least one metal phosphate.

13. An electrically conductive substrate which is at least partially coated with a baked electrodeposition coating material according to any of Claims 1 to 9 and/or which is obtainable by the method according to either of claims 11 and 12.

14. A use of at least one tris(alkoxycarbonylamino)-1,3,5-triazine in a cathodically depositable electrodeposition coating material in a fraction of at least 25 wt%, based on the total weight of crosslinking agents in the electrodeposition coating material, for reducing or eliminating the sensitivity to disruption of the electrodeposition coating bath toward impurities present therein through phosphates and/or through other metal salts which have been carried into the electrodeposition coating bath as a result of pretreatment steps ahead of the electrodeposition coating, and/or for lowering the baking temperature of the electrodeposition coating material in the case of at least partial coating of an electrically conductive substrate to a temperature in a range from 125°C to 165°C.

15. The use according to Claim 14, **characterized in that** said tris(alkoxycarbonylamino)-1,3,5-triazine used comprises at least one tris(alkoxycarbonylamino)-1,3,5-triazine of the general formula (I) 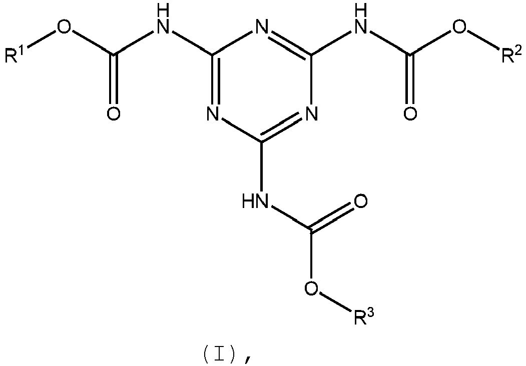 in which the radicals R¹, R² and R³ each independently of one another are C₁-C₈ alkyl groups.

## Revendications

1. Peinture électrophorétique aqueuse pouvant être déposée de manière cathodique, contenant
(a) au moins un produit d'addition époxyde-amine,
(b) au moins un pigment et/ou au moins une charge et
(c) au moins un réticulant,
**caractérisée en ce qu'**une proportion d'au moins 25% en poids du réticulant (c), par rapport au poids total du réticulant (c), est formée par au moins une tris(alcoxycarbonylamino)-1,3,5-triazine et la proportion le cas échéant résiduelle est formée par au moins un réticulant différent de ladite au moins une tris(alcoxycarbonylamino)-1,3,5-triazine, choisi dans le groupe constitué par les polyisocyanates bloqués, les aminoplastes et leurs mélanges.

2. Peinture électrophorétique selon la revendication 1, **caractérisée en ce qu'**une proportion d'au moins 30% en poids du réticulant (c), par rapport au poids total du réticulant (c), est formée par au moins une tris(alcoxycarbonylamino)-1,3,5-triazine.

3. Peinture électrophorétique selon la revendication 1 ou 2, **caractérisée en ce qu'**une proportion d'au moins 35% en poids du réticulant (c), par rapport au poids total du réticulant (c), est formée par au moins une tris(alcoxycarbonylamino)-1,3,5-triazine.

4. Peinture électrophorétique selon l'une quelconque des revendications précédentes, **caractérisée en ce que** le composant (c) est contenu dans la peinture électrophorétique en une quantité dans une plage de 5 à 45% en poids, par rapport à la teneur totale en solides de la peinture électrophorétique.

5. Peinture électrophorétique selon l'une quelconque des revendications précédentes, **caractérisée en ce qu'**au moins une tris(alcoxycarbonylamino)-1,3,5-triazine de formule générale (I) est présente en tant que tris(alcoxycarbonylamino)-1,3,5-triazine 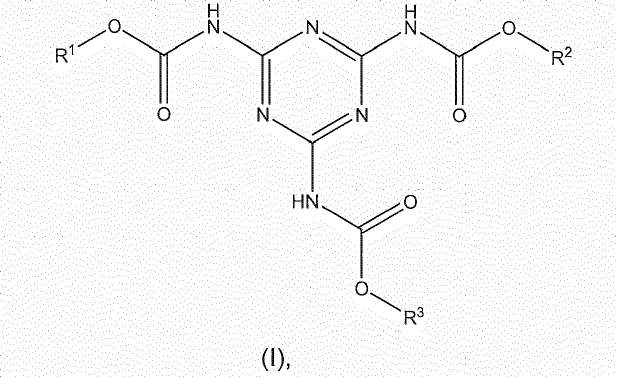 dans laquelle les radicaux R¹, R² et R³ représentent, à chaque fois indépendamment l'un de l'autre, des groupes Ci-Cs-alkyle.

6. Peinture électrophorétique selon la revendication 5, **caractérisée en ce que** les radicaux R¹, R² et R³ représentent, à chaque fois indépendamment l'un de l'autre, des groupes C₁-C₄-alkyle.

7. Peinture électrophorétique selon l'une quelconque des revendications précédentes, **caractérisée en ce que** le composant (b) est contenu dans la peinture électrophorétique en une quantité dans une plage de 0,5 à 17,5% en poids, par rapport au poids total de la peinture électrophorétique.

8. Peinture électrophorétique selon l'une quelconque des revendications précédentes, **caractérisée en ce que** le rapport pondéral relatif des composants (a) et (c) l'un par rapport à l'autre dans la peinture électrophorétique se situe dans une plage de 5:1 à 1,1:1.

9. Peinture électrophorétique selon l'une quelconque des revendications précédentes, **caractérisée en ce que** le produit d'addition époxyde-amine (a) est un produit de transformation d'au moins une résine époxyde à base de bisphénol A et d'au moins une amine primaire et/ou secondaire et/ou de ses/leurs sels et/ou d'au moins un sel d'une amine tertiaire.

10. Procédé pour le revêtement au moins partiel d'un substrat électriquement conducteur par peinture par électrophorèse cathodique, dans lequel
(1) le substrat électriquement conducteur est plongé au moins partiellement dans un bain d'électrophorèse, lequel contient la peinture électrophorétique selon l'une quelconque des revendications 1 à 9,
(2) le substrat est commuté en tant que cathode,
(3) un film de peinture est déposé par courant continu sur le substrat,
(4) le substrat peint est enlevé du bain d'électrophorèse et
(5) le film de peinture déposé sur le substrat est cuit.

11. Procédé selon la revendication 10, **caractérisé en ce que** la température de cuisson selon l'étape (5) se situe dans une plage de 125 à 165°C.

12. Procédé selon la revendication 10 ou 11, **caractérisé en ce que** le substrat électriquement conducteur utilisé dans l'étape (1) est un substrat prétraité par au moins un phosphate métallique.

13. Substrat électriquement conducteur, qui est revêtu au moins partiellement par une peinture électrophorétique cuite selon l'une quelconque des revendications 1 à 9 et/ou qui peut être obtenu selon le procédé selon l'une quelconque des revendications 11 et 12.

14. Utilisation d'au moins une tris(alcoxycarbonylamino)-1,3,5-triazine dans une peinture électrophorétique pouvant être déposée de manière cathodique en une proportion d'au moins 25% en poids, par rapport au poids total de réticulant dans la peinture électrophorétique, pour la réduction ou l'élimination de la sensibilité aux perturbations du bain d'électrophorèse par rapport aux impuretés qui y sont contenues par des phosphates et/ou d'autres sels métalliques, qui sont entraînés par les étapes de prétraitement en amont de la peinture par électrophorèse dans le bain d'électrophorèse et/ou pour abaisser la température de cuisson de la peinture électrophorétique lors d'un revêtement au moins partiel d'un substrat électriquement conducteur à une température dans la plage de 125°C à 165°C.

15. Utilisation selon la revendication 14, **caractérisée en ce qu'**au moins une tris(alcoxycarbonylamino)-1,3,5-triazine de formule générale (I) est utilisée en tant que tris(alcoxycarbonylamino)-1,3,5-triazine 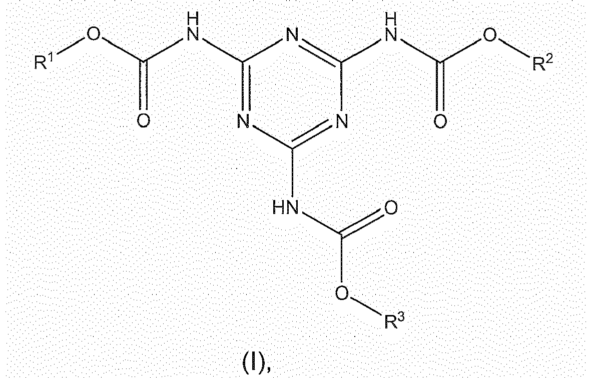 dans laquelle les radicaux R¹, R² et R³ représentent, à chaque fois indépendamment l'un de l'autre, des groupes Ci-Cs-alkyle.
